# EUROPEAN PATENT SPECIFICATION

(11) **EP 2 620 674 B1**
(45) Date of publication and mention of the grant of the patent: **06.05.2015**
(21) Application number: 10857509.3
(22) Date of filing: 20.09.2010
(51) Int. Cl.: F16H 55/17

(54) **WELDING STRUCTURE**
SCHWEISSSTRUKTUR
STRUCTURE DE SOUDAGE

(43) Date of publication of application: 31.07.2013
(73) Proprietor: TOYOTA JIDOSHA KABUSHIKI KAISHA, Toyota-shi, Aichi-ken, 471-8571 (JP)
(72) Inventor: TSUCHIDA Michitaka c/o TOYOTA JIDOSHA KABUSHIKI KAISHA, Toyota-shi, Aichi-ken, 471-8571 (JP); UCHIDA Keisuke c/o TOYOTA JIDOSHA KABUSHIKI KAISHA, Toyota-shi, Aichi-ken, 471-8571 (JP); IWATANI Shingo c/o TOYOTA JIDOSHA KABUSHIKI KAISHA, Toyota-shi, Aichi-ken, 471-8571 (JP); ENDO Takahito c/o TOYOTA JIDOSHA KABUSHIKI KAISHA, Toyota-shi, Aichi-ken, 471-8571 (JP); KATO Shotaro c/o TOYOTA JIDOSHA KABUSHIKI KAISHA, Toyota-shi, Aichi-ken, 471-8571 (JP); TSUNEKAWA Hirokazu c/o TOYOTA JIDOSHA KABUSHIKI KAISHA, Toyota-shi, Aichi-ken, 471-8571 (JP)
(74) Representative: Albutt, Anthony John
(86) International application number: PCT/JP2010/066265
(87) International publication number: WO 2012/039014

(56) References cited:
- WO-A1-2007/085848
- JP-B2- S5 224 292
- JP-B2- H07 100 233
- JP-U- S5 735 551
- JP-U- S55 165 151
- US-A- 4 070 920

## Description

### TECHNICAL FIELD

The present invention relates to a welding structure of for example a vehicle differential gear, in which a plurality of components such as a ring gear and a differential case are joined by welding.

### BACKGROUND ART

One example of a welding structure in which a plurality of components are joined by welding is disclosed in Patent Document 1, as a welding structure of a ring gear and a differential case in a vehicle differential mechanism. FIG. 15 is a cross sectional view showing a differential unit disclosed in Patent Document 1.

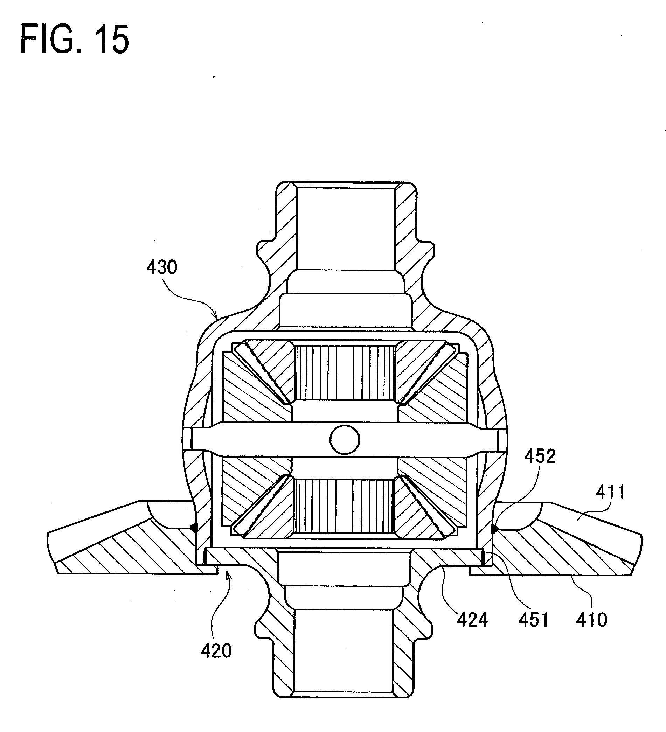

A ring gear 410 is joined to a differential housing 430 in a manner that weld bead 452 is formed in a recess located radially more inside than a teeth portion 411 so as to cover over a differential weld bead 451 between an open end 420 of a differential housing 430 and a cover 424 joined by welding, as shown in FIG. 15.

As another example of the welding structure of the ring gear and the differential case shown in Patent Document 1, FIGs. 16 and 17 show a first example of a welding structure of a ring gear and a differential case.

In this conventional first example, while a gear-side flange 215 of an annular ring gear 210 is press-fitted on a case-side flange 231 of a differential case 230, the gear-side flange 215 and the case-side flange 231 are joined to each other by laser welding at both sides of the space 231S in an axial direction AX of the ring gear 210. Weld beads 250 between the gear-side flange 215 and the case-side flange 231 are formed in a vertical direction with respect to a radial direction RD of the ring gear 210.

In this first example, the gear-side flange 215 is press-fitted on and welded to the case-side flange 231. Thus, at the time when one side is welded first, large stress occurs on the other side and exerts an influence on the flanges during welding of the other side. This causes large distortion or deformation of the entire ring gear 210.

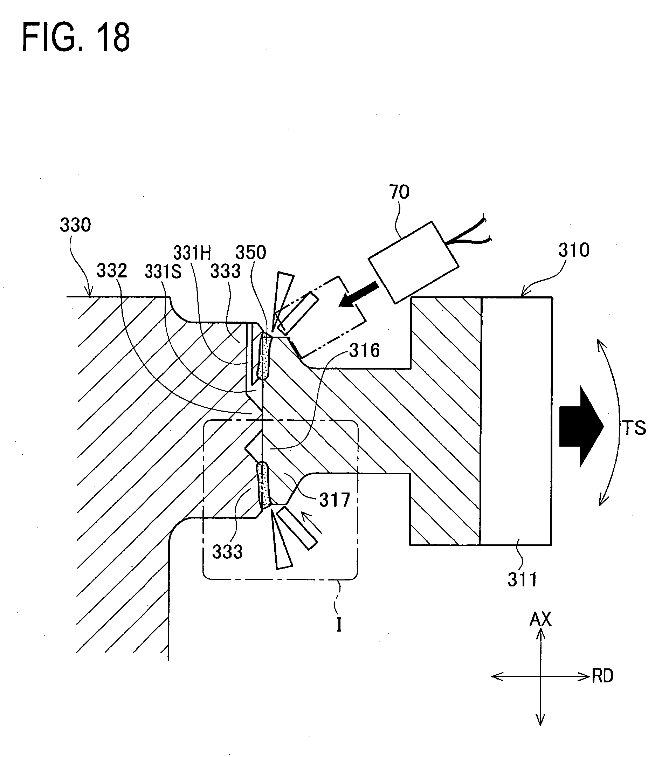

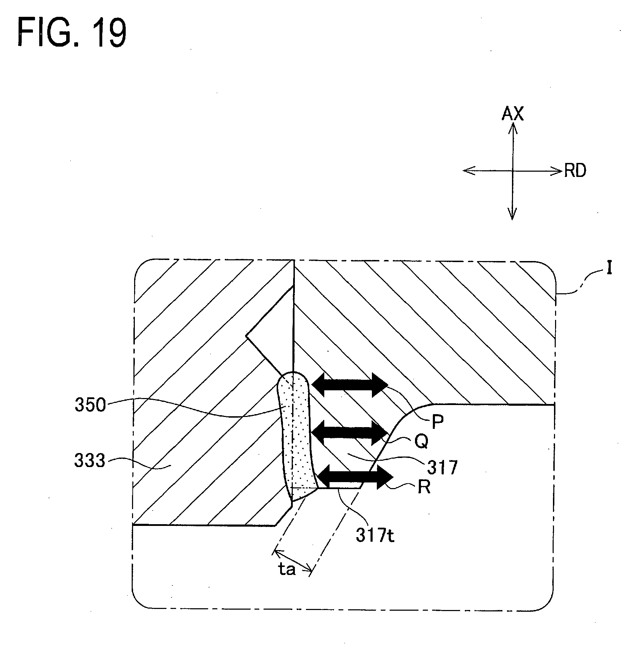

Furthermore, as another example different from the above first example, FIG. 18 shows a conventional second example of a welding structure of a ring gear and a differential case. FIG. 19 is an enlarged view of a part I in FIG. 18.

An annular ring gear 310 has a thin wall in a radial direction RD. Accordingly, thermal distortion occurs in the radial direction RD by the heat during welding. For example, it is apt to be deformed into an elliptic shape or the like. In this conventional second example, a gear-side press-fit portion 316 of the ring gear 310 is press-fitted on a case-side press-fit portion 332 of the differential case 330 before welding. While a gear-side welded portion 317 and a case-side welded portion 333 are placed with a slight clearance therebetween, they are joined by laser welding at both sides of the space 331S and the case-side press-fit portion 332 as shown in FIG. 18.

In this second example, the gear-side press-fit portion 316 is press-fitted on the case-side press-fit portion 332 and then weld bead 350 is formed with a large thickness between the gear-side welded portion 317 and the case-side welded portion 333. This makes it possible to reduce the occurrence of distortion, breakage or cracking, caused by welding while ensuring the strength of the weld bead 350.

As shown in FIG. 19, the gear-side welded portion 317 includes an end portion 317t (a portion with a thickness ta in FIG. 19) not covered by the weld bead 350 and formed with a small thickness. Thus, during welding, the end portion 317t is preferentially thermally deformed, thereby preventing the ring gear 310 and the gear portion 311 from undergoing thermal deformation resulting from thermal expansion and solidification contraction or shrinkage.

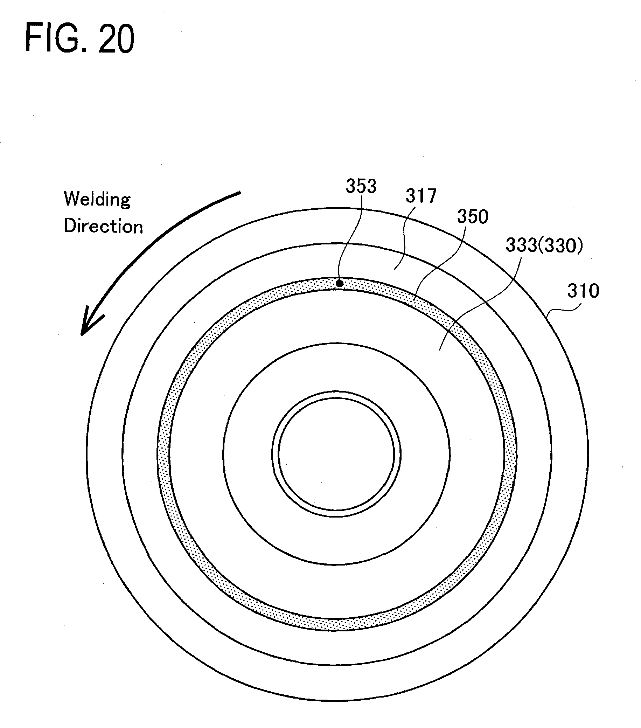

Herein, FIG. 20 is a plan view showing a manner to join the ring gear and the differential case by laser welding in the conventional second example, viewed from the axis of the ring gear.

Laser welding is performed along a seam between the gear-side welded portion 317 and the case-side welded portion 333 as shown in FIG. 20 by making a circuit from a welding start-end point (a lap portion) 353 to return to the lap portion 353, thereby forming a circular weld bead 350. The lap portion 353 is a weakest portion of the weld bead 350 because the weld bead 350 is heated doubly at this welding start-end point. For quality control, a quality test or inspection of the weld bead 350 is particularly important to ensure the weld depth in the lap portion 353 especially.

To be concrete, the quality test is conducted in a nondestructive test using a test device such as an ultrasonic flaw detector with respect to all the workpieces after welding in order to control weld defects such as shrinkage, blowhole, and breakage which may occur in the weld bead, and weld depth which may influence weld strength. In the quality test, a testing probe of the ultrasonic flaw detector or the like needs to be disposed in a vertical orientation with respect to the weld bead in a depth direction of the weld bead and in a position at a close distance from the weld bead to make high-accuracy test.

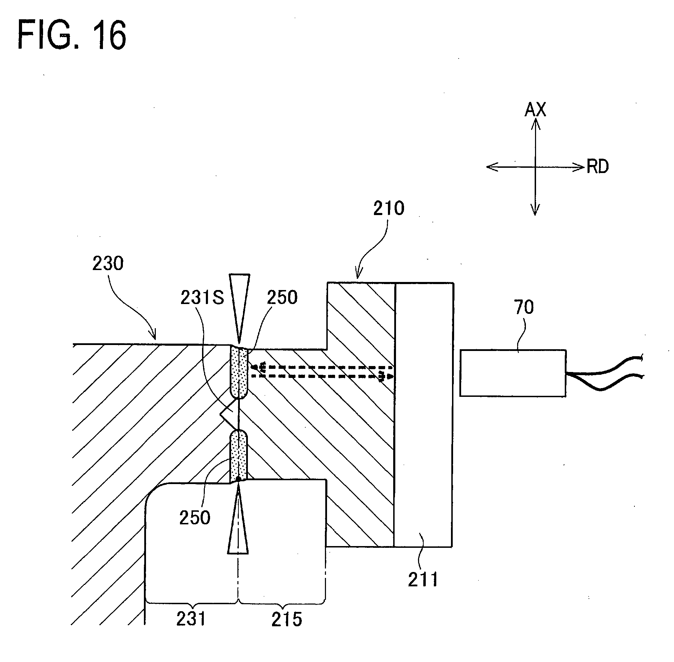

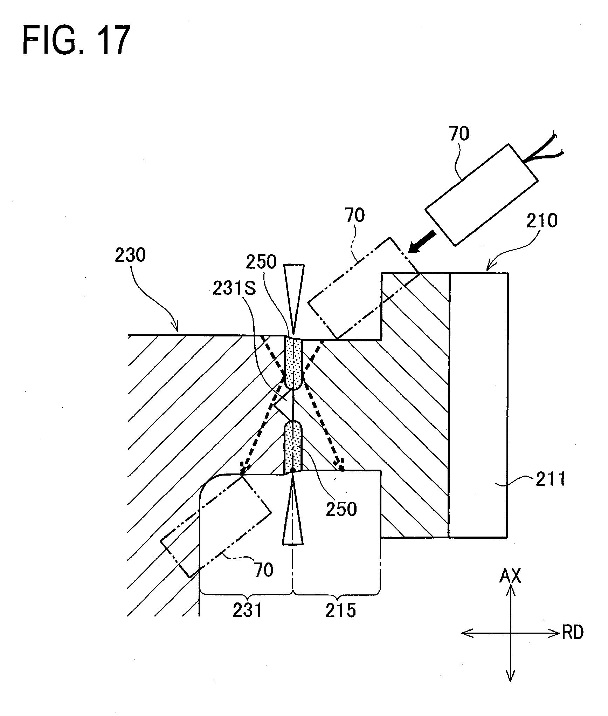

In the case of the welding structure in the conventional first example, as shown in FIG. 16, a gear portion 211 is present between the testing probe 70 and the weld bead 250 even when the testing probe 70 is disposed to aim at the weld bead 250. Therefore, an incident signal from the testing probe 70 to the weld bead 250 and a reflection signal returning from the weld bead 250 to the testing probe 70 cannot be appropriately obtained. This makes it impossible to conduct the quality test of the weld bead 250. As shown in FIG. 17, furthermore, when the test is to be performed by placing testing probes 70 individually on obliquely lateral sides of the ring gear 210, one of the probes 70 interferes with the ring gear 210 and the other probe 70 interferes with the differential case 230. In addition, test signals could not be transmitted/received in the same direction between each testing probe 70 and the weld bead 250. Thus, the quality test of the weld bead 250 could not be performed.

As in the above first example, even in the welding structure of the conventional second example, the weld bead 350 is formed in a substantially vertical direction to a gear-side flange 315 and a case-side flange 331 as shown in FIG. 18. Accordingly, when the testing probe 70 is to be disposed in the above appropriate measurement position, the testing probe 70 interferes with the ring gear 310 and the differential case 330, and hence the quality test of the weld bead 350 could not be accurately executed.

The present applicants therefore conceived that an inspection through hole 331H continuous to the hollow cavity 331 S is formed near and along the weld bead 350 as shown in FIG. 18, an optical test method is applied to receive reflection light irradiated in the inspection hole 331H to detect whether the weld depth of the weld bead 350 reaches the hollow cavity 331H to check the weld depth.

A welding structure comprising: an annular ring gear including a gear portion and a gear joint; and a case including a case joint joined to the gear joint, the welding structure being configured to fix the ring gear to the case by welded portions formed on both ends in an axial direction of the ring gear so that a gear-side weld surface which is a weld surface of the gear joint and a case-side weld surface which is a weld surface of the case joint are welded to each other, is known from the US 4 070 920 A.

### RELATED ART DOCUMENTS

### PATENT DOCUMENTS

Patent Document 1: JP-A-2006-509172

### SUMMARY OF INVENTION

### PROBLEMS TO BE SOLVED BY THE INVENTION

However, in the conventional welding structure of the ring gear and the differential case, the testing probes could not be disposed in the appropriate measurement positions and the quality test of weld bead could not be conducted. Specifically, in Patent Document 1 where the weld bead 452 is present in the recess of the ring gear 410, radially more inside than the teeth portion 411, the testing probe interferes with the ring gear 410 and the differential housing 430 and could not be placed in the appropriate measuring position. Thus, the quality test of the weld bead 452 could not be performed.

In the welding structures in the conventional first and second examples, furthermore, as mentioned above, the testing probes 70 could not be disposed in the appropriate measurement positions and the quality test of the weld beads 250 and 350 could be not be executed.

In the conventional second example, if the quality test of the weld bead 350 is to be performed using the optical test method the applicants conceived, it is not possible to check the weld depth only at a portion of the case-side flange 331 formed with the inspection hole 331H. In addition, since the inspection hole 331H is formed under the lap portion 353 having lowest strength, this inspection hole 331H acts as a cutout, resulting in a further decrease in fatigue strength in the lap portion 353. As a result, a start point of fatigue breakage occurs immediately under the weld bead 350 in the lap portion 353.

The present invention has been made to solve the above problems and has a purpose to provide a welding structure facilitating a quality test of a welded portion and also capable of improving the quality of a product including this welded portion.

### MEANS OF SOLVING THE PROBLEMS

To achieve the above purpose, one aspect of the invention provides a welding structure configured as below.
(1) In a welding structure comprising: an annular ring gear including a gear portion and a gear joint; and a case including a case joint joined to the gear joint, the welding structure being configured to fix the ring gear to the case by welded portions formed on both ends in an axial direction of the ring gear so that a gear-side weld surface which is a weld surface of the gear joint and a case-side weld surface which is a weld surface of the case joint are welded to each other, wherein the welded portion on at least one side in the axial direction is placed more outside than a gear end face of the gear portion in the axial direction, or in the welded portion on at least one side in the axial direction, the gear-side weld surface and the case-side weld surface are inclined with respect to the axial direction.
(2) As one aspect of the invention, in the welding structure described in (1), preferably, a portion formed with the welded portion is one of the gear joint and the case joint that is formed to be thinner in a radial direction of the ring gear than other portions.
(3) As one aspect of the invention, in the welding structure described in (1) or (2), preferably, the welded portion on at least the one side is located more outside than the gear end face in the axial direction, and a first weld separation section is provided to separate the gear end face and the welded portion at a distance t1 (t1>0) in the axial direction.
(4) As one aspect of the invention, in the welding structure described in (1) or (2), preferably, a second weld separation section is provided to separate the welded portion and the case joint at a distance t2 (t2>0).
(5) As one aspect of the invention, in the welding structure described in any one of (1) to (4), preferably, the case joint is formed with a thin-wall portion in at least one place in a circumferential direction of the ring gear, the thin-wall portion having a reduced thickness by cutting from inside to outside in the radial direction of the ring gear.
(6) As one aspect of the invention, in the welding structure described in (5), preferably, the welded portion is formed circularly in the circumferential direction of the ring gear, and the thin-wall portion is provided in correspondence with a position of a welding start-end point at which a start point and an end point of the welded portion coincide, the thin-wall portion being formed in a position on an extended line passing at least the welding start-end point in the radial direction of the ring gear.
(7) As one aspect of the invention, in the welding structure described in any one of (1) to (6), preferably, the welded portions include a first welded portion located on one side in the axial direction in which the gear-side weld surface and the case-side weld surface are inclined at an angle θ (θ<90°) with respect to the axial direction.
(8) As one aspect of the invention, in the welding structure described in (7), preferably, in the second welded portion located on the other side in the axial direction, the gear-side weld surface and the case-side weld surface are formed to be horizontal to the axial direction.
(9) As one aspect of the invention, in the welding structure described in (8), preferably, the second welded portion is formed in a manner that an other gear-side weld surface located on the other side in the axial direction of the gear-side weld surface and an other case-side weld surface located on the other side in the axial direction of the case-side weld surface are press-fitted with each other, and the first welded portion is formed in a manner that one gear-side weld surface located on the one side in the axial direction of the gear-side weld surface and one case-side weld surface located on the one side in the axial direction of the case-side weld surface are separated from each other by a clearance s (s > 0).
(10) As one aspect of the invention, in the welding structure described in any one of (7) to (9), preferably, a hollow cavity is formed between the first welded portion and the second welded portion by a clearance between the gear-side weld surface and the case-side weld surface.

### EFFECTS OF THE INVENTION

Operations and advantage effects of the welding structure of the invention having the above configurations will be explained below.
(1) In the above welding structure comprising: an annular ring gear including a gear portion and a gear joint; and a case including a case joint joined to the gear joint, the welding structure being configured to fix the ring gear to the case by welded portions formed on both ends in an axial direction of the ring gear so that a gear-side weld surface which is a weld surface of the gear joint and a case-side weld surface which is a weld surface of the case joint are welded to each other, the welded portion on at least one side in the axial direction is placed more outside than a gear end face of the gear portion in the axial direction. Accordingly, during a quality test of the welded portions after welding, when a state of the welded portions is to be inspected in a nondestructive manner using a testing probe of a non-contact test device such as an ultrasonic flaw detector, the testing probe can be placed in an appropriate measurement position to aim at the gear joint or the case joint. This enables the quality test to be conducted with high reliability.

Specifically, when the state of the welded portions is to be inspected by use of the non-contact test device, the appropriate measurement position of the testing probe has to be set in an orientation vertical to the welded portion and in a position at a near distance from the welded portion. In the case where weld defects such as shrinkage, blowhole, and breakage or cracking are occurring or in the case where the depth of the welded portions does not meet a desired depth, they influence weld strength. For the welded portion formed in a portion which may become problematic in strength, the quality test is important for quality control.

In the above welding structure, the welded portion is a portion where the gear joint of the ring gear and the case joint of the case are welded and fixed to each other with desired weld strength. This substantially contributes to fixation between the ring gear and the case.

The welded portion on at least the one side is placed more outside than the gear end face of the gear portion in the axial direction. This means that, in the above defined welded portion, a vertical line passing through the welded portion in a vertical direction is inevitably in a position more outside than the gear end face even in any position in a direction along the axial direction of the ring gear.

For placement of the welded portion needing to be subjected to the quality test, furthermore, it is necessary to intentionally consider test conditions such as the size and the performance of a testing probe to be used in the test so that the testing probe is allowed to widely detect the presence/absence of weld defects and the depth of the welded portion from one end to the opposite end of the welded portion. Therefore, the welded portion needing the quality test is placed more outside than the gear end face.

Accordingly, since the welded portion particularly needing the quality test is placed more outside than the gear end face in the axial direction, the testing probe is less likely to interfere with the gear portion during the non-contact quality test of the welded portion apart from the gear portion that interferes with the test. Therefore, the quality test can be more reliably executed with the testing probe disposed to aim at the welded portion from an appropriate measurement position.

Alternatively, in the above welding structure comprising: an annular ring gear including a gear portion and a gear joint; and a case including a case joint joined to the gear joint, the welding structure being configured to fix the ring gear to the case by welded portions formed on both ends in an axial direction of the ring gear so that a gear-side weld surface which is a weld surface of the gear joint and a case-side weld surface which is a weld surface of the case joint are welded to each other, in the welded portion on at least one side in the axial direction, the gear-side weld surface and the case-side weld surface are inclined with respect to the axial direction. Accordingly, during a quality test of the welded portions after welding, when a state of the welded portions is to be inspected in a nondestructive manner using a testing probe of a non-contact test device such as an ultrasonic flaw detector, the testing probe can be placed in an appropriate measurement position to aim at the gear joint or the case joint. This enables the quality test to be conducted with high reliability.

Specifically, in the welded portion particularly needing the quality test, unless the testing probe detects widely and evenly the presence/absence of weld defects and the depth of the welded portion from the one end to the opposite end of the welded portion during the quality test, the quality test could not be conducted with high reliability.

In the above welding structure, as the welded portion particularly needing the quality test, the gear-side weld surface and the case-side weld surface are formed at a slant with respect to the axial direction in the welded portion on at least the one side. Thus, the welded portion formed by welding is inclined with respect to the axial direction.

Since the welded portion needing the quality test is inclined with respect to the axial direction, the testing probe can be tilted according to the inclined welded portion with respect to the end face of the gear joint or the case joint in the axial direction to aim at the welded portion from the appropriate measurement position.

Since the position of the testing probe is displaced along the end face of the gear joint or the case joint in the axial direction for example while the testing probe is aiming at the welded portion as above, the test can be conducted with higher accuracy through the testing probe placed at close range from the welded portion. This enables the quality test to be conducted with higher accuracy. Further, when the quality test is performed by tilting the testing probe in conformity to the inclined welded portion, the testing probe can detect the state of the welded portion widely and evenly from one end of the inclined welded portion located on one side in the axial direction to the other end located on the other side in the axial direction. Consequently, the quality test of the welded portion can be performed more reliably by placing the testing probe in an appropriate measurement position to aim at the welded portion from the end face of the gear joint or case joint in the axial direction.

Consequently, the above welding structure can facilitate the placement of the testing probe in the appropriate measurement position for the quality test of the welded portion. It is therefore possible for the non-contact test device to transmit and receive a signal to detect the state of the welded portion between the testing probe and the welded portion under more preferable conditions. This enables the test to be performed with high reliability. Hence, since the quality test of the welded portion using the non-contact test device can be realized with high accuracy and high reliability, a product including the welded portions having been subjected to the quality test exhibits high quality.

Accordingly, there are provided advantages that the quality test of the welded portions can be facilitated and the quality of the product including such welded portions can be enhanced.
(2) According to the above welding structure, in the welding structure described in (1), a portion formed with the welded portion is one of the gear joint and the case joint that is formed to be thinner in a radial direction of the ring gear than other portions. Accordingly, during welding, a thin-wall portion is preferentially thermally deformed, thereby preventing the gear portion of the ring gear from undergoing thermal deformation due to thermal expansion and solidification contraction.
(3) According to the above welding structure, in the welding structure described in (1) or (2), the welded portion on at least the one side is located more outside than the gear end face in the axial direction, and a first weld separation section is provided to separate the gear end face and the welded portion at a distance t1 (t1>0) in the axial direction. Accordingly, the heat generated in the welded portion on the one side during welding is partially released in the first weld separation section and is less transmitted to the gear portion of the ring gear. Thus, this can prevent thermal deformation of the gear portion of the ring gear due to thermal expansion and solidification contraction or shrinkage.
(4) According to the above welding structure, in the welding structure described in (1) or (2), a second weld separation section is provided to separate the welded portion and the case joint at a distance t2 (t2>0). Accordingly, the heat generated in the welded portion during welding is partially released in the second weld separation section and is less transmitted to the gear portion of the ring gear. Thus, this can prevent thermal deformation of the gear portion of the ring gear due to thermal expansion and solidification contraction or shrinkage.
(5) According to the above welding structure, in the welding structure described in any one of (1) to (4), the case joint is formed with a thin-wall portion in at least one place in a circumferential direction of the ring gear, the thin-wall portion having a reduced thickness by cutting from inside to outside in the radial direction of the ring gear. Accordingly, even when the ring gear is inevitably deformed by the heat during welding, the deformation in the radial direction can be more uniformized with respect to the circumferential direction.
   Specifically, the ring gear is of an annular shape and the thickness of the ring gear in the radial direction is generally relatively very thin as compared with the diameter of the ring gear. Thus, a part of the ring gear in the circumferential direction is liable to be distorted in a warping direction in the axial direction by the heat generated during welding and also mainly in the radial direction. The ring gear is thus likely to be deformed into e.g. an elliptic shape.
   In the above welding structure, considering the above tendency, a portion that is less likely to be thermally deformed during welding in the circumferential direction of the ring gear is made as a thin-wall portion having low rigidity in the axial direction, and a portion that is likely to be thermally deformed is made as a non-thin-wall portion having higher rigidity in the axial direction than that the thin-wall portion.
   Accordingly, the high rigidity portion and the low rigidity portion are provided in the axial direction so that the rigidity of the ring gear in the axial direction is made different between the thin-wall portion and the non-thin-wall portion in the circumferential direction of the ring gear. Even when the ring gear is inevitably deformed by the heat during welding, the deformation of the ring gear in the radial direction can be more uniformized over the circumferential direction.
   Furthermore, since the rigidity of the ring gear in the axial direction is different between the thin-wall portion and the non-thin-wall portion in the circumferential direction of the ring gear, the ring gear can be provided as a high-performance gear that is less likely to cause NV (Noise Vibration).
(6) According to the above welding structure, in the welding structure described in (5), the welded portion is formed circularly in the circumferential direction of the ring gear, and the thin-wall portion is provided in correspondence with a position of a welding start-end point at which a start point and an end point of the welded portion coincide, the thin-wall portion being formed in a position on an extended line passing at least the welding start-end point in the radial direction of the ring gear. Accordingly, using the testing probe placed on the thin-wall portion from the appropriate measurement position, the quality test is enabled at the welding start-end point of the welded portion.
   In particular, the welding start-end point of the welded portion is not sufficient in for example the weld depth that influences the weld strength. Furthermore, this point is in a portion that is apt to cause weld defects such as shrinkage, blowhole, and breakage. Therefore, the quality test at the welding start-end point is especially important.
   The above welding structure, having the thin-wall portion, allows the quality test at the welding start-end point to be easily performed by a conventional measurement method using the testing probe of the non-contact test device such as the ultrasonic flaw detector.
   Moreover, as described above, there is no need to provide any inspection hole near the welding start-end point in the optical test method conceived by the applicants. In the welded portion, therefore, no fatigue breakage resulting from the inspection hole occurs.
(7) According to the above welding structure, in the welding structure described in any one of (1) to (6), the welded portions include a first welded portion located on one side in the axial direction in which the gear-side weld surface and the case-side weld surface are inclined at an angle θ (θ<90°) with respect to the axial direction. For instance, in the case where the gear-side weld surface and the case-side weld surface are inclined at the angle θ to the radial outside the ring gear, the testing probe has only to be placed on the case joint on a side away from the gear joint in particular in a direction perpendicular to the angle θ. Thus, the testing probe can be disposed in the appropriate measurement position without interfering with the gear portion.
   Consequently, as long as the testing probe is aimed at the first welded portion from the above position, the quality test of the first welded portion can be conducted more reliably.
   It is to be noted that, in the case where the gear-side weld surface and the case-side weld surface are inclined at the angle θ to the radial outside of the ring gear, the angle θ is preferably set in a range, 40° to 55°, enabling stable fixation of the ring gear to the case on a radial inside in the radial direction while further reducing the bending moment of the ring gear.
   In the case of θ=45°, particularly, when an external force generated by engagement between the ring gear and an opposite-side gear acts in the axial direction of the gear portion at a meshing position of the gear portion near a pitch circle diameter of the gear portion, a component of the external force in the axial direction and a component of the external force on the radial inside in the radial direction are equal in magnitude to each other in the welded portion. Therefore, the ring gear is fixed in a most stable state to the case and excessive stress is not applied to the welded portion.
(8) According to the above welding structure, in the welding structure described in (7), in the second welded portion located on the other side in the axial direction, the gear-side weld surface and the case-side weld surface are formed to be horizontal to the axial direction. Accordingly, when the gear portion of the ring gear meshes with the opposite-side gear, the first welded portion can reduce a bending stress in a warping direction of the axis of the ring gear.
   Specifically, when the ring gear meshes with the opposite-side gear, the external force generated by meshing acts on the gear portion at for example a meshing point near a pitch circle diameter in the axial direction of the gear portion. The position of the line of action acting in the axial direction at that time is defined as a reference position. On one side of the case joint in the axial direction, an intersection between the end face of the case joint and the case-side weld surface is defined as a first intersection. On the other side of the case joint in the axial direction, an intersection between the end face of the case joint and the case-side weld surface is defined as a second intersection. The distance between the reference position and the first intersection in the radial direction of the ring gear is referred to as a first distance L1, and the distance between the reference position and the second intersection is referred to as a second distance L2.
   The first distance L1 and the second distance L2 are expressed by a relation of Distance L1 < Distance L2. Thus, it is possible to reduce the bending moment in a counterclockwise direction from the other side to the one side in the axial direction, thereby reducing a bending stress applied on the first welded portion.
(9) According to the above welding structure, in the welding structure described in (8), the second welded portion is formed in a manner that an other gear-side weld surface located on the other side in the axial direction of the gear-side weld surface and an other case-side weld surface located on the other side in the axial direction of the case-side weld surface are press-fitted with each other, and the first welded portion is formed in a manner that one gear-side weld surface located on the one side in the axial direction of the gear-side weld surface and one case-side weld surface located on the one side in the axial direction of the case-side weld surface are separated from each other by a clearance s (s > 0). This makes it possible to reduce distortion between the ring gear and the case during welding, particularly, thermal distortion of the ring gear.
   Specifically, the ring gear and the case are in a state where the other gear-side weld surface and the other case-side weld surface are press-fitted with each other on the other side in the axial direction. On the one side in the axial direction, furthermore, the clearance s is present between the one gear-side weld surface and the one case-side weld surface. Thus, even when the thermal deformation occurs during welding, the gear joint and the case joint are not restrained by each other. Accordingly, when welding of the second welded portion on the other side is performed earlier than the first welded portion, the ring gear and the case are placed in a state where they are less likely to be relatively thermally deformed. Even after welding of the first welded portion, the thermal distortion of the ring gear can be restrained.
(10) According to the above welding structure, in the welding structure described in any one of (7) to (9), a hollow cavity is formed between the first welded portion and the second welded portion by a clearance between the gear-side weld surface and the case-side weld surface. Accordingly, before beads of the first and second welded portions are cooled and solidified after welding, when the beads of the first and second welded portions flow and are solidified with temperature changes, the hollow cavity can absorb the flowing beads. This can prevent the occurrence of residual stress in the first and second welded portions.

When the first and second welded portions are formed by laser welding, in particular, the beads of the first and second welded portions contain gas right after welding. This gas is allowed to be released to the hollow cavity. Accordingly, it is possible to restrain weld defects such as shrinkage, blowhole, and breakage or cracking in the first and second welded portions.

### BRIEF DESCRIPTION OF THE DRAWINGS

FIG. 1 is an explanatory view to show a welding structure of a ring gear and a differential case in a first example of the invention, illustrating the ring gear and the differential case in a plan view viewed from a direction of the axial of the ring gear;
FIG. 2 is a cross sectional view taken along an arrow A-A in FIG. 1;
FIG. 3 is an enlarged view of a part C in FIG. 2;
FIG. 4 is an enlarged view of a part D in FIG. 2;
FIG. 5 is an explanatory view to show, in an enlarged view, a part E in FIG. 3 being in a pre-welding state;
FIG. 6 is an explanatory view to show, in an enlarged view, a part F in FIG. 4 being in a pre-welding state;
FIG. 7 is an explanatory view to show a manner of performing a quality test of a lap portion;
FIG. 8 is an explanatory view to show a manner of performing a quality test of a welded portion;
FIG. 9 is an explanatory view to show operation of the welding structure of the ring gear and the differential case in the first example;
FIG. 10 is an explanatory view to show a welding structure of a ring gear and a differential case in a second example of the invention, illustrating a cross sectional view taken along the arrow A-A in FIG. 1;
FIG. 11 is an enlarged view of a part G in FIG. 10;
FIG. 12 is an explanatory view to show a manner of performing a quality test of a second welded portion in a first test;
FIG. 13 is an explanatory view to show a manner of performing a check test of a hollow cavity portion;
FIG. 14 is an enlarged view of a part H in FIG. 13;
FIG. 15 is a cross sectional view showing a differential unit disclosed in Patent Document 1;
FIG. 16 is an explanatory view to show a welding structure of a ring gear and a differential case in a conventional first example, illustrating a cross sectional view of the ring gear viewed from a vertical direction with respect to a plane taken along an axial direction of the ring gear and including an axis;
FIG. 17 illustrates, as with FIG. 16, a cross sectional view of the welding structure of the ring gear and the differential case in the conventional first example;
FIG. 18 is an explanatory view to show a welding structure of a ring gear and a differential case in a conventional second example, illustrating a cross sectional view as in FIGs. 16 and 17;
FIG. 19 is an enlarged view of a part I in FIG. 18; and
FIG. 20 is an explanatory view to show the welding structure of the ring gear and the differential case in the conventional second example, illustrating a plan view of the ring gear and the differential case viewed from an axial direction of the ring gear.

### MODE FOR CARRYING OUT THE INVENTION

A detailed description of a preferred embodiment of embodying the present invention will now be given referring to the accompanying drawings. The present embodiment shows an example of a welding structure of a ring gear in a differential device (a differential gear) of a vehicle and a differential case for fixing the ring gear.

In the present embodiment, AX in the accompanying drawings denotes an axial direction of the ring gear, RD denotes a radial direction of the ring gear, and CR denotes a circumferential direction of the ring gear.

### Example 1

The welding structure in the present example is briefly explained first.

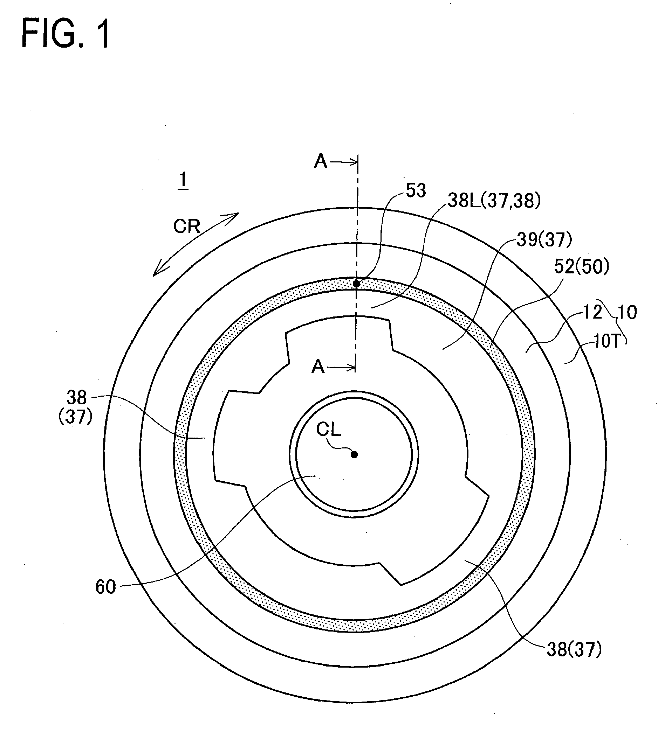

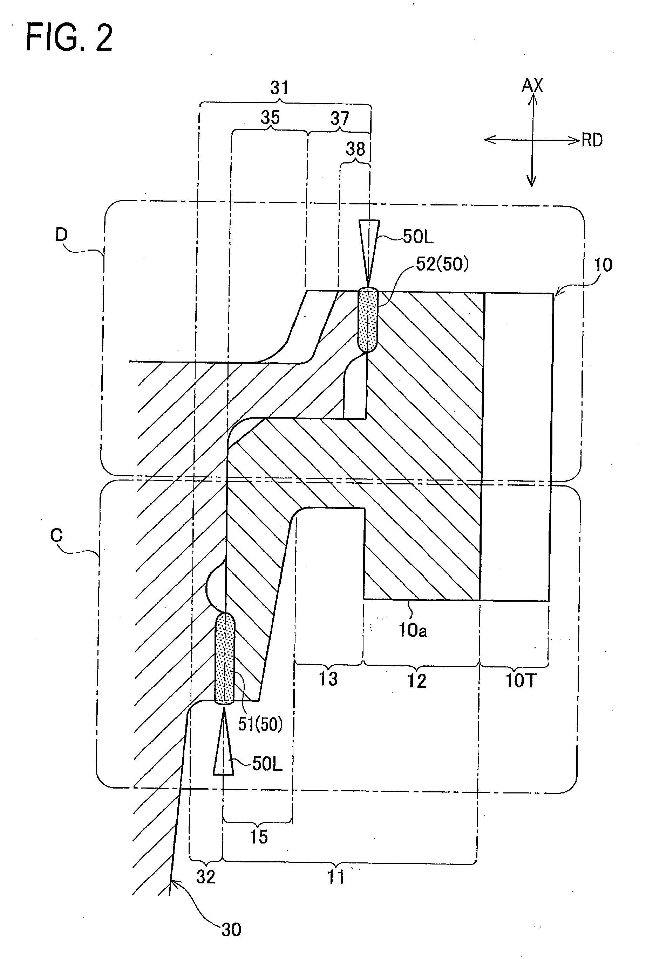

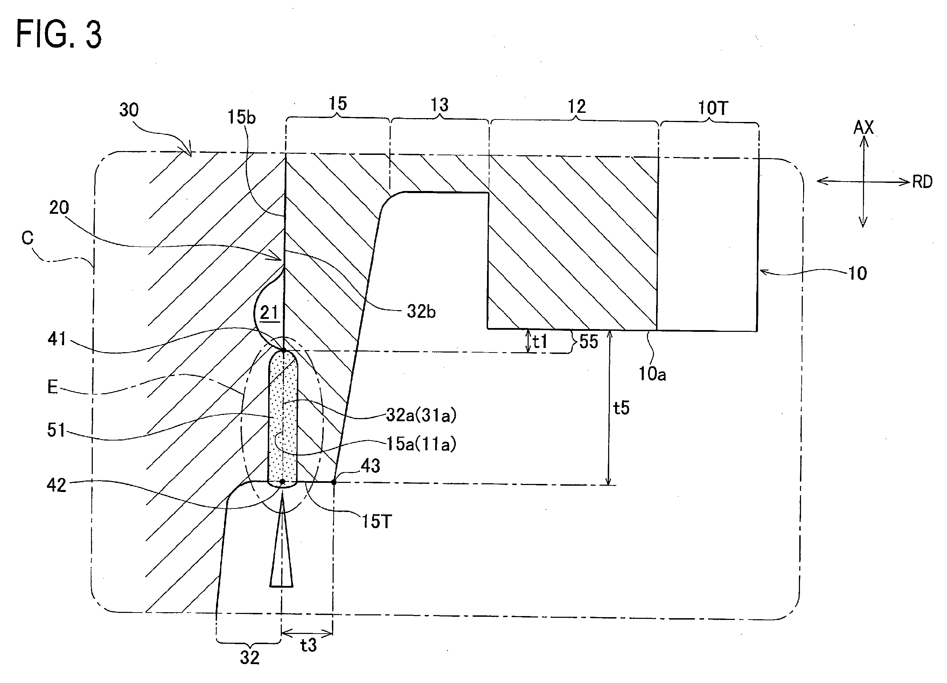

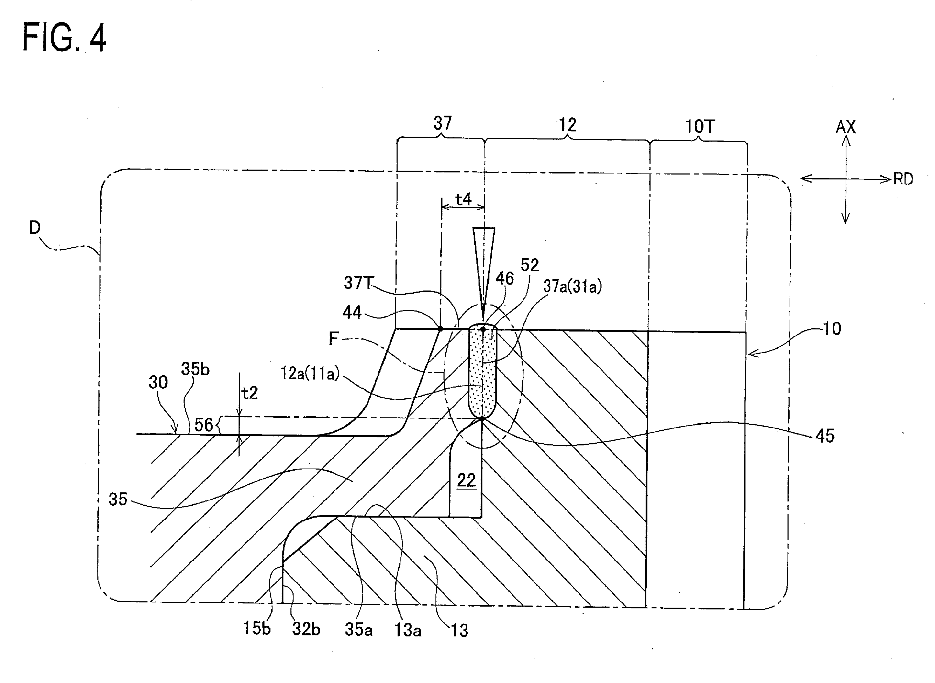

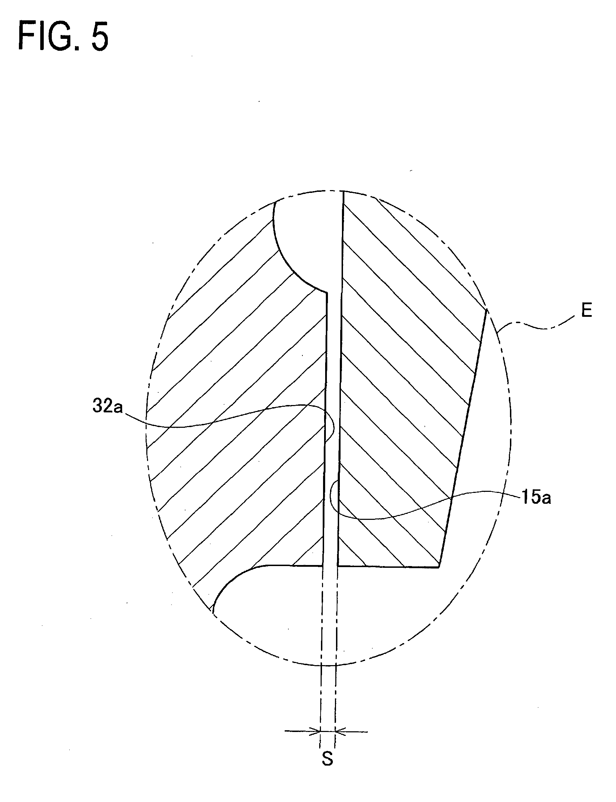

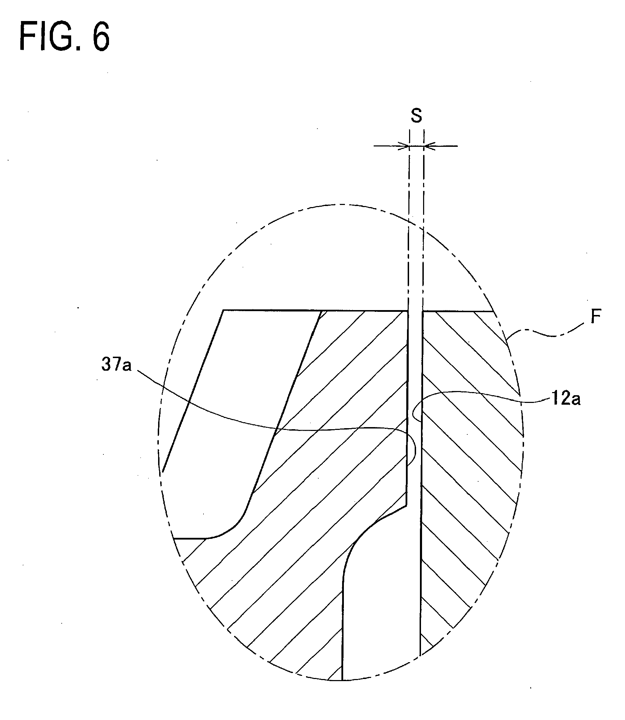

FIG. 1 is a plan view showing a state where the ring gear and the differential case are joined to each other, viewed from an axis of the ring gear, in which the differential case is partially illustrated only for the vicinity of a portion joined to the ring gear. FIG. 2 is a cross sectional view taken along an arrow A-A in FIG. 1. FIG. 3 is an enlarged view of a part C in FIG. 2. FIG. 4 is an enlarged view of a part D in FIG. 2. FIG. 5 is an explanatory view to show, in an enlarged view, a part E in FIG. 3 being in a pre-welding state. FIG. 6 is an explanatory view to show, in an enlarged view, a part F in FIG. 4 being in a pre-welding state.

In a differential gear 1, an annular ring gear 10 joined to a differential case 30 (case) is mounted coaxially with an axis CL of a differential shaft 60 as shown in FIG. 1. The ring gear 10 and the differential case 30 are fixed to each other by two circular welded portions 50, i.e., a first welded portion 51 on one side and a second welded portion 52 on the other side in the axial direction AX of the ring gear 10. The ring gear 10 and the differential shaft 60 receive power through a pinion gear not shown meshing with the ring gear 10.

The ring gear 10 is explained below.

The annular ring gear 10 is made of metal such as steel subjected to a heat treatment, for example, carburizing and quenching. This ring gear 10 includes, as shown in FIG. 2, a gear joint 11 (a gear joint) on a radial inside and a gear portion 10T (a gear portion) on a radial outside in a radial direction RD. The gear portion 10T is formed with a plurality of teeth meshing with the pinion gear.

The gear joint 11 includes a teeth-forming portion 12 continuous to the gear portion 10T, a gear-side connecting portion 13 protruding from the teeth-forming portion 12 radially inward in FIG. 2, and a gear-side flange 15 continuous to the gear-side connecting portion 13 and extending in the axial direction AX

In the portion formed with the first welded portion 51, the gear-side flange 15 of the gear joint 11 is formed with a thinner thickness than other portions in the radial direction RD of the ring gear 10. Specifically, the gear-side flange 15 is formed with a thickness in the radial direction RD becoming gradually smaller toward one side (a lower side in FIG. 2) in the axial direction AX as shown in FIGs. 2 and 3. A gear-side flange thin-wall portion 15T located at an end on the one side is formed to be thinnest with a predetermined thickness t3 (t3>0).

In the gear-side flange 15, the flange thin-wall portion 15T is located in a position (a third reference end 43) more outside than and apart from a first gear end face 10a by a predetermined distance t5 (t5>0) in the axial direction AX to sufficiently ensure a necessary size in the axial direction for weld strength in the first welded portion 51 formed by welding. For a quality test of the first welded portion 51 using the testing probe 70, the predetermined distance t5 is set in intentional consideration of test conditions such as the size and the performance of the testing probe 70 to be used in the test as will be described in detail later.

The gear-side flange 15 includes, on a gear-side weld surface 11a located on a radial inside in the radial direction RD, a gear-side first weld surface 15a (one gear-side weld surface) on the one side in the axial direction AX and a gear-side flange press-fit surface 15b on the other side (an upper side in FIG. 2), the weld surface 15a and the press-fit surface 15b being on the same plane.

The differential case 30 will be explained below.

The differential case 30 is made of metal, e.g., cast iron, and includes a case joint 31 held in contact with and joined to the gear joint 11 of the ring gear 10. In the present embodiment, the case joint 31 includes a case-side first flange 32 located on a most radial inside in the radial direction RD and on the one side in the axial direction AX (the lower side in FIG. 2) and a case-side second flange 37 located on a most radial outside and on the other side (the upper side in FIG. 2) in the axial direction AX. The case-side first flange 32 and the case-side second flange 37 are continuous via a case-side connecting portion 35 in the radial direction RD.

The case-side first flange 32 is joined to the gear-side flange 15 of the gear joint 11 of the ring gear 10, forming the first welded portion 51, as shown in FIGs. 2 and 3. The case-side first flange 32 is formed in correspondence with the gear-side flange 15 so that the distance in the axial direction AX from the first gear end face 10a to a second reference end 42 located on a side (one side in the axial direction AX) away from the first gear end face 10a is the predetermined distance t5.

The case-side first flange 32 includes a case-side first weld surface 32a (one case-side weld surface) and a case-side flange press-fit surface 32b on a radial outside in the radial direction RD. The first weld surface 32a is located on one end side (a lower end in FIG. 2) in the axial direction AX The first weld surface 32a and the flange press-fit surface 32b are located on both sides of a first hollow cavity portion 21 and different in diameter in the radial direction RD. In other words, before welding, when the gear joint 11 of the ring gear 10 is assembled with the case joint 31 of the differential case 30, as shown in FIG. 5, a clearance s (s>0) is provided between the gear-side first weld surface 15a and the case-side first weld surface 32a.

The first hollow cavity portion 21 is formed to be recessed radially inward in the radial direction RD from the case-side first weld surface 32a and the case-side flange press-fit surface 32b to clearly separate the first weld surface 32a and the flange press-fit surface 32b.

Accordingly, when the bead of the first welded portion 51 flows toward the other side in the axial direction AX than the first reference end 41 with temperature changes, the first hollow cavity portion 21 can absorb the flowing bead. This makes it possible to prevent the occurrence of residual stress in the first welded portion 51 formed of the bead having been cooled and solidified after welding. Gas contained in the bead of the first welded portion 51 is allowed to be released into the first hollow cavity portion 21. This can prevent the occurrence of weld defects such as shrinkage, blowhole, and breakage due to the gas contained in the first welded portion 51.

Furthermore, the case-side first weld surface 32a is located in a position at a distance t1 (t1>0) in the axial direction AX between the first reference end 41 which is an end on the other side in the axial direction AX and the first gear end face 10a as shown in FIG. 3. In other words, a first weld separation section 55 is provided so that the first gear end face 10a and the first welded portion 51 to be formed after welding are apart from each other at the distance t1 in the axial direction AX

On the other hand, the case-side second flange 37 is joined to the teeth-forming portion 12 of the gear joint 11 of the ring gear 10 to form the second welded portion 52 as shown in FIGs. 2 and 4.

In an area in which the second welded portion 52 is formed, the case-side second flange 37 is formed to be thinner than other portions in the radial direction RD of the ring gear 10. That is, the case-side second flange 37 is formed with a thickness in the radial direction RD becoming gradually smaller toward the other side (the upper side in FIG. 2) in the axial direction AX as shown in FIGs. 2 and 4.

The case-side second flange 37 includes a case-side second weld surface 37a (other case-side weld surface) located on a radial outside in the radial direction RD and on the other end side in the axial direction AX. Before welding, when the gear joint 11 of the ring gear 10 is assembled with the case joint 31 of the differential case 30, a clearance s (s > 0) is provided with the gear-side second weld surface 12a and the case-side second weld surface 37a as shown in FIG. 6.

On a side closer to one end than the case-side second weld surface 37a, there is provided a surface recessed radially inward in the radial direction RD. When the ring gear 10 is mounted and fixed to the differential case 30, a second hollow cavity portion 22 is formed by the recessed surface, an end face of the teeth-forming portion 12 on a radial inside in the radial direction RD, and an inner end face 35a of the case-side connecting portion 35.

When the bead of the second welded portion 52 flows toward the one side in the axial direction AX than a fifth reference end 45 with temperature changes, the second hollow cavity portion 22 also can absorb the flowing bead, similar to the first hollow cavity portion 21. This makes it possible to prevent the occurrence of residual stress in the second welded portion 52 with the bead having been cooled and solidified after welding. Gas contained in the bead of the second welded portion 52 is allowed to be released into the second hollow cavity portion 22. This can prevent the occurrence of weld defects such as shrinkage, blowhole, and breakage due to the gas contained in the second welded portion 52.

The case-side second weld surface 37a is located in a position at a distance t2 (t2>0) in the axial direction AX between the fifth reference end 45 which is an end on the one end side in the axial direction AX and an outer end surface 35b of the case-side connecting portion 35 as shown in FIG. 4. In other words, a second weld separation section 56 is provided so that the outer end face 35b of the case-side connecting portion 35 of the case joint 31 and the second welded portion 52 to be formed by welding are apart from each other at the distance t2 in the axial direction AX

In the present embodiment, as shown in FIG. 1, the case-side second flange 37 of the case joint 31 is formed with three flange thin-wall portions 38 (thin-wall portions) each having a thickness reduced by cutting the second flange 37 from radial inside to radial outside in the radial direction RD of the ring gear 10, the flange thin-wall portions 38 being arranged in a circumferential direction of the second flange 37. One of the three flange thin-wall portions 38 is provided, as described later, in correspondence with the position of the lap portion 53 (a welding start-end point) in which the start point and the end point of the second welded portion 52 (the welded portion 50) coincide with each other. The flange thin-wall portion 38L (the flange thin-wall portion 38) of the three flange thin-wall portions 38 is formed in a position on an extended line (an arrow A-A in FIG. 1) passing through the lap portion 53 in the radial direction RD of the ring gear 10 as shown in FIG. 1.

As with the case-side second flange 37, the flange thin-wall portions 38 are also formed with a thickness in the radial direction RD becoming gradually smaller toward the other side in the axial direction AX as shown in FIGs. 2 and 4. A case-side flange thin-wall portion 37T on the other-side end is formed to be thinnest with a predetermined thickness t4 (t4>0) between a fourth reference end 44 and a sixth reference end 46.

Joining between the gear joint 11 of the ring gear 10 and the case joint 31 of the differential case 30 is explained below referring to FIGs. 2 to 4.

The ring gear 10 is inserted on the case joint 31 of the differential case 30 from the one side to the other side (from the lower side to the upper side in FIG. 2) in the axial direction AX. The gear joint 11 of the ring gear 10 is assembled with the case joint 31 of the differential case 30.

To be concrete, until an end face 13a of the gear-side connecting portion 13 abuts on the inner end face 35a of the case-side connecting portion 35, the flange press-fit surface 15b of the gear-side flange 15 of the gear joint 11 is press-fitted with and inserted on the flange press-fit surface 32b of the case-side first flange 32 of the case joint 31. By a press-fit section 20 between the gear-side flange press-fit surface 15b and the case-side flange press-fit surface 32b, the ring gear 10 is positioned in place with respect to the differential case 30.

A method of welding the gear joint 11 of the ring gear 10 to the case joint 31 of the differential case 30 is explained below referring to FIGs. 1 to 4.

The ring gear 10 positioned on the differential case 30 by the press-fit section 20 is fixed to the differential case 30 by two welded portions 50 (first welded portion 51 and second welded portion 52) formed by laser welding in the present example using a welding wire (not shown) made of e.g. stainless material to melt a part of the gear joint 11 and a part of the case joint 31. As the order of forming the two welded portions 50, in the present example, the second welded portion 52 is first formed and then the first welded portion 51 is formed.

In the ring gear 10 placed in position on the differential case 30 by the press-fit section 20, the second welded portion 52 is formed circularly by laser welding while the case-side second weld surface 37a and the gear-side second weld surface 12a remain separated with the clearance s. To be specific, as shown in FIGs. 1, 2, and 7, a laser beam 50L is aimed at the clearance s between the second weld surface 37a and the second weld surface 12a and is irradiated from the lap portion 53 as the start point. After irradiation by one circle around the axis CL, the laser beam 50L is stopped at the same lap portion 53 as the end point. Thus, the second welded portion 52 is formed to extend in a circumferential direction CR with a depth h2 (h2>0).

Since the clearance s is provided between the case-side second weld surface 37a and the gear-side second weld surface 12a before the second welded portion 52 is formed, the gear joint 11 and the case joint 31 are not restrained by each other even when thermal deformation occurs during welding. Residual stress is thus less likely to occur in the second welded portion 52.

As with the second welded portion 52, the first welded portion 51 is formed circularly by laser welding using a laser beam 50L irradiated toward the clearance s provided between the case-side first weld surface 32a and the gear-side first weld surface 15a. Thus, the first welded portion 51 is formed to extend in the circumferential direction CR with a depth h1 (h1>0). The first welded portion 51 (a welded portion on at least one side in the axial direction) is located more outside than the first gear end face 10a located on one side of the gear portion 10T in the axial direction AX

Since the clearance s is provided between the case-side first weld surface 32a and the gear-side first weld surface 15a before the first welded portion 51 is formed, the gear joint 11 and the case joint 31 are not restrained by each other even when thermal deformation occurs during welding. Residual stress is thus less likely to occur in the first welded portion 51.

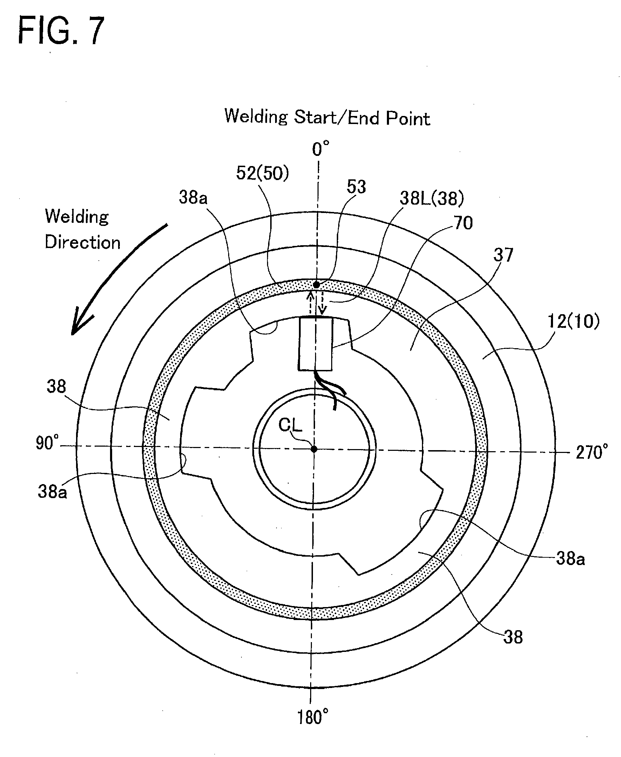

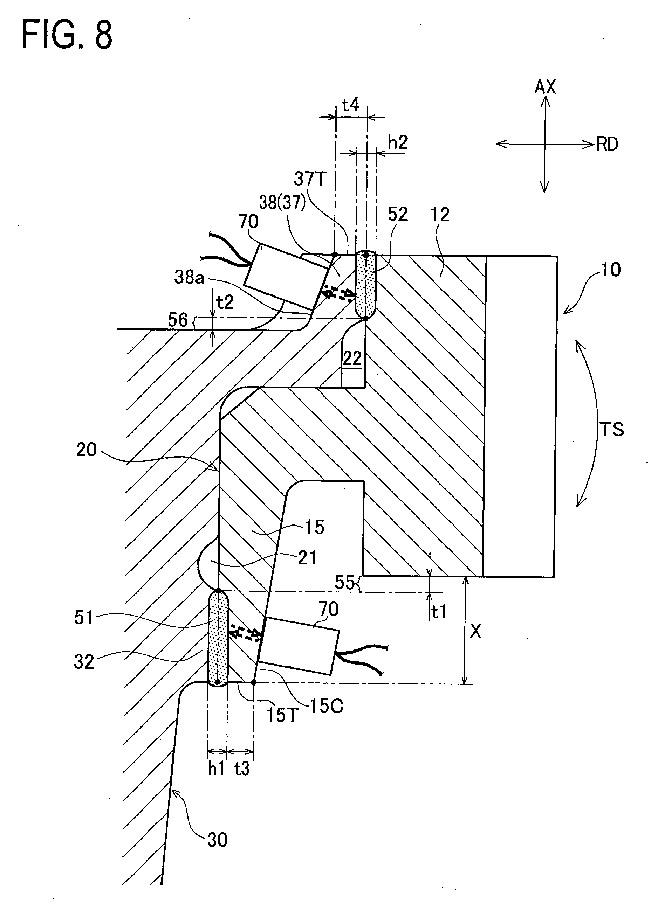

The quality test of the welded portions 50 is explained below referring to FIGs. 7 and 8.

FIG. 7 is an explanatory view to show a manner of performing the quality test at the lap portion. FIG. 8 is an explanatory view to show a manner of performing the quality test of the welded portion.

Importance of the quality test of the welded portions 50 is first briefly described.

The quality test is a nondestructive test using a test device such as an ultrasonic flaw detector in order to control weld defects such as shrinkage, blowhole, and breakage which occur in the bead of the welded portion, and the weld depth which may influence weld strength. This test is performed on all the workpieces having been subjected to welding.

In the present example, such a quality test is also essential for the welded portions 50. This quality test is performed using the testing probe 70 such as a known ultrasonic flaw detector or the like. In particular, the lap portion 53, which is heated and melted twice at the start of welding and at the end of welding, is lowest in strength in the welded portion 50. It is therefore important to perform the quality test of the welded portion 50 in particular in order to especially ensure the welding depth h2 in the lap portion 53 for quality control.

For achieving a high accurate test, the testing probe 70 has to be disposed in an orientation vertical to the welded portion 50 and in a position at a near distance from the welded portion 50.

When the quality test is to be performed on the lap portion 53 of the second welded portion 52 (the welded portion 50), an operator brings the testing probe 70 in contact with and along an inner circumferential surface 38a of the flange thin-wall portion 38L as shown in FIGs. 7 and 8. In the quality test, the operator checks whether the weld depth h2 of the second welded portion 52 is satisfied and the presence/absence of weld defects. Furthermore, even when the quality test of the second welded portion 52 is performed at other two flange thin-wall portions 38 than the flange thin-wall portion 38L as needed, the operator holds the testing probe 70 in contact with and along respective inner circumferential surfaces 38a in a similar manner to the flange thin-wall portion 38L.

On the other hand, for performing the quality test of the first welded portion 51 (the welded portion 50), the operator holds the testing probe 70 on the outer circumferential surface 15c of the gear-side flange 15 as shown in FIG. 8 to inspect the condition of the first welded portion 51. In the quality test, the operator checks whether the weld depth h1 of the first welded portion 51 is satisfied and the presence/absence of weld defects as to the entire circumference of the first welded portion 51 formed in a circular shape as needed.

Operations and advantages of the welding structure of the present example configured as above will be explained below.

In the welding structure of the present example, provided with the annular ring gear 10 including the gear portion 10T and the gear joint 11, and the differential case 30 including the case joint 31 joined to the gear joint 11. In the welding structure, by the first welded portion 51 and the second welded portion 52 (the welded portions 50) in each of which the gear-side weld surface 11a (the gear-side first weld surface 15a and the gear-side second weld surface 12a) which is a weld surface of the gear joint 11 is joined to the weld surface 31a (the case-side first weld surface 32a and the case-side second weld surface 37a) which is a weld surface of the gear-side second case joint 31, the ring gear 10 is fixed to the differential case 30 at both ends in the axial direction AX of the ring gear 10. The first welded portion 51 on at least the one side in the axial direction AX is located more outside than the gear end face 10a of the gear portion 10T in the axial direction AX. During the quality test of the first welded portion 51 after welding, for example, when the condition of the first welded portion 51 is to be checked in a nondestructive manner using the testing probe 70 of the non-contact test device such as an ultrasonic flaw detector, the testing probe 70 disposed in the appropriate measurement position can be oriented in contact with the outer circumferential surface 15c of the gear-side flange 15 of the gear joint 11. Thus, the quality test can be executed with high reliability.

Specifically, when the condition of each welded portion 50 is to be inspected using the non-contact test device, the appropriate measurement position of the testing probe 70 has to be set so that the testing probe 70 is placed in an orientation vertical to each welded portion 50 and in a position at a short distance from the welded portion 50. In the case where weld defects such as shrinkage, blowhole, and breakage are occurring in the welded portions 50 or in the case where the depth of the welded portions 50 does not satisfy desired depths h1 and h2, they influence the weld strength. Therefore, the quality test of the welded portions 50 formed in some portions that will be particularly problematic in strength is important for quality control.

In the welding structure of the present example, each welded portion 50 is a portion to be welded to substantially contribute to fixation of the ring gear 10 to the differential case 30 so that the gear joint 11 of the ring gear 10 and the case joint 31 of the differential case 30 are fixed to meet a desired weld strength.

Placement of the first welded portion 51 of the welded portions 50 more outside than the first gear end face 10a of the gear portion 10 in the axial direction AX represents that the vertical line passing through the first welded portion 51 in the vertical direction is located more outside in the axial direction AX than the first gear end face 10a at any position in the axial direction AX of the ring gear 10 in the first welded portion 51 (the welded portion 50).

Furthermore, for placement of the first welded portion 51 needing the quality test, it is necessary to intentionally consider test conditions such as the size and the performance of the testing probe 70 to be used in the test so that the testing probe 70 can widely detect the presence/absence of weld defects and the depth h1 of the first welded portion 51 from one end to the other end of the first welded portion 51 in the axial direction AX. Then, the first welded portion 51 needing the quality test is placed more outside than the gear end face 10a.

Accordingly, since the first welded portion 51 particularly needing the quality test is placed more outside than the gear end face 10a in the axial direction AX, when the first welded portion 51 is to be subjected to the quality test in non-contact manner, the first welded portion 51 is apart from the gear portion 10T which may interfere with the test. Thus, the testing probe 70 is less likely to interfere with the gear portion 10T. The testing probe 70 is therefore allowed to be aimed at the first welded portion 51 from the appropriate measurement position to perform the quality test more reliably.

Consequently, the testing probe 70 can be easily placed in the appropriate measurement position for the quality test of the welded portion 51. Thus, the testing probe 70 can transmit and receive a signal to and from the first welded portion 51 to detect the condition of the first welded portion 51 under more preferable conditions for the non-contact test device. This enables the test to be performed with high reliability. Hence, the quality test of the first welded portion 51 using the non-contact test device can be realized with high accuracy and high reliability, so that the differential gear 1 including the first welded portion 51 having subjected to the quality test provides high quality.

Accordingly, advantages are provided to facilitate the quality test of the first welded portion 51 and also improve the quality of the differential gear 1 including the first welded portion 51.

Meanwhile, the ring gear joined to the differential case by welding is configured with a reduced diameter for convenience of space as compared with the conventional ring gear joined to the differential case by fastening using set bolts. This can achieve high gear of the differential gear and size reduction of an entire transaxle.

However, even when the ring gear of the welding structure and the ring gear of the bolt-fastening structure are equal in the number of rotations of a differential shaft, the circumferential velocity of teeth of the ring gear of the welding structure decreases due to the reduced diameter of the ring gear. Thus, when lubricant oil in the differential gear is being scraped by the teeth of the ring gear in rotation as indicated with a thick arrow in FIG. 18, a flow amount of the lubricant oil scraped by the teeth decreases as compared with that by the ring gear of the bolt-fastening structure.

In the ring gear of the bolt-fastening structure, furthermore, the set bolt head is also used to scrape the lubricant oil. In contrast, the ring gear of the welding structure having no set bolt cannot scrape the lubricant oil using the set bolt head.

Particularly, in a hybrid vehicle and an electric vehicle that are not provided with an oil pump arranged to discharge a large amount of the oil toward the transaxle such as an automatic transaxle and a mechanical CVT, circulation of the lubricant oil depends on scraping by the tooth top of the ring gear. In the hybrid vehicle and the electric vehicle, additionally, the lubricant oil scraped by the tooth top of the ring gear is also used to cool a motor.

The ring gear of the welding structure therefore has a problem that the rotating ring gear is unable to sufficiently scrape and circulate the lubricant oil.

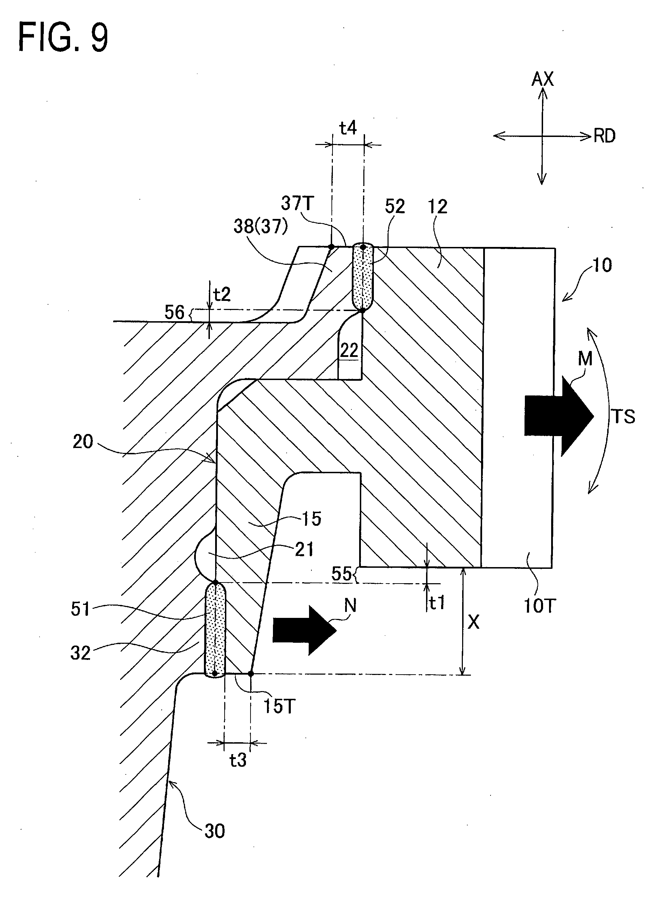

FIG. 9 is an explanatory view to show further operations of the welding structure of the ring gear and the differential case in the first example.

Against the above problem, the welding structure of the present example is configured so that the teeth portion 10T of the ring gear 10 in rotation scrapes the lubricant oil in the differential gear 1 as indicated by an arrow M in FIG. 9 and also the gear-side flange 15 located more outside than the gear end face 10a in the axial direction AX scrapes the oil in a region indicated with X in FIG. 9 as indicated by an arrow N in FIG. 9.

This scraping of the lubricant oil by the gear-side flange 15 can supplement an amount of the oil that would be scraped by the set bolt head in the ring gear of the conventional bolt-fastening structure and a reduced flow amount of scraped oil by the tooth top due to change from the bolt-fastening structure to the welding structure.

Since the teeth portion 10T of the rotating ring gear 10 and the region of the gear-side flange 15 defined in the range X scrape the lubricant oil, increasing a flow amount of scraped oil, the oil can be supplied to meshing areas between the ring gear 10 and a pinion gear and others and also scraped to cool the motor.

Accordingly, for instance, the differential gear 1 configured with the welding structure of the present example can be mounted even in a vehicle such as a hybrid vehicle and an electric vehicle that are not provided with an oil pump arranged to discharge a large amount of oil toward the transaxle.

In the conventional second example, meanwhile, the end portion 317t (a portion having a thickness ta in FIG. 19) of the gear-side welded portion 317, not covered by the weld bead 350 is formed with a small thickness as shown in FIG. 19. This configuration causes the end portion 317t to be preferentially thermally deformed to prevent the teeth portion 311 of the ring gear 310 from being subjected to the thermal deformation due to thermal expansion and solidification contraction.

However, in the ring gear 310, of portions P, Q, and R of the gear-side welded portion 317, the portion P on the innermost side may be greatly thermally deformed due to welding in for example a twisting direction TS and others in FIG. 18.

The thermal deformation is allowed to a certain degree preferentially in the end portion 317t existing in the portion R. In the case where the portion R is greatly thermally deformed, the deformation of the portion P that is apt to be larger than the portion R exceeds permissible deformation of the portion P and thus could not absorb the deformation of the portion R.

In this case, under the influence of welding, the thermal deformation due to thermal expansion and solidification contraction extends to even the teeth portion 311 of the ring gear 310. In the teeth portion 311, for example, there is a possibility that deteriorates gear accuracy such as adjacent pitch error, accumulated pitch error, and radial run-out of teeth.

When the gear accuracy is deteriorated, the ring gear 310 does not mesh with the pinion gear in good condition. This causes gear noise when the ring gear 310 meshes with the pinion gear. Thus, the differential shaft rotating in meshing relation to the pinion gear and its bearing, the differential case 330, and others are apt to vibrate, resulting in a problem that deteriorates NV (Noise Vibration) performance.

In the welding structure of the present example, in contrast, in the portion formed with the first welded portion 51 (the welded portion 50), the gear-side flange 15 of the gear joint 11 is formed to be thinner than other portions in the radial direction RD of the ring gear 10. This allows the thin-wall portion 15T of the gear-side flange 15 to be preferentially thermally deformed during welding, thereby preventing the gear portion 10T of the ring gear 10 from being subjected to thermal deformation due to thermal expansion and solidification and contraction.

In the portion to be formed with the second welded portion 52 (the welded portion 50), the case-side second flange 37 is formed to be thinner than other portions in the radial direction RD of the ring gear 10. This allows the thin-wall portion 37T of the case-side second flange 37 to be preferentially thermally deformed during welding, thereby preventing the gear portion 10T of the ring gear 10 from being subjected to thermal deformation due to thermal expansion and solidification and contraction.

In the welding structure of the present example, furthermore, the first welded portion 51 is located more outside than the gear end face 10a in the axial direction AX. The first weld separation section 55 is provided to separate the first welded portion 51 to be formed after welding and the gear end face 10a at the distance t1 in the axial direction AX The heat generated in the first welded portion 51 during welding is partially released in the first weld separation section 55 and thus is less likely to transfer to the gear portion 10T of the ring gear 10. This can prevent thermal deformation of the gear portion 10T of the ring gear 10 due to thermal expansion and solidification contraction.

Especially, on the one side in the axial direction AX, the gear-side flange 15 is formed to extend in the axial direction AX so that the gear-side flange thin-wall portion 15T is greatly separated from the first gear end face 10a by the predetermined distance t5 and the first welded portion 51 between the flange 15 and the case-side first flange 32 is located more outside than the gear end face 10a. Thus, bending rigidity of the ring gear 10 in a twisting direction TS is enhanced (see FIGs. 8 and 9). Therefore, the first welded portion 51 is not subjected to a large bending stress in the twisting direction TS. Even when the weld depth h1 of the first welded portion 51 is reduced, the first welded portion 51 can provide sufficient weld strength.

In the welding structure of the present example, the second weld separation section 56 is provided to separate the second welded portion 52 to be formed after welding and the outer end face 35b of the case-side connecting portion 35 of the case joint 31 by the distance t2 in the axial direction AX The heat generated in the welded portion 52 during welding is partially released in the second weld separation section 56 and is less likely to transfer to the gear portion 10T of the ring gear 10. This can prevent thermal deformation of the gear portion 10T of the ring gear 10 due to thermal expansion and solidification contraction.

In the welding structure of the present example, the case-side second flange 37 of the case joint 31 is formed with the flange thin-wall portions 38 at three places in the circumferential direction CR of the ring gear 10, each thin-wall portion 38 having a reduced thickness in the radial direction RD of the ring gear 10 by cutting the flange 37 from inside to outside. Even when the ring gear 10 is inevitably deformed by the heat during welding, the deformation in the radial direction RD is more uniformized in the circumferential direction CR.

Specifically, the ring gear 10 is of an annular shape and the thickness in the radial direction RD thereof is generally relatively very thin as compared with the diameter of the ring gear 10. A part of the ring gear 10 in the circumferential direction CR is liable to be distorted in the warping direction in the axial direction AX by the heat during welding and also mainly in the radial direction RD. The ring gear 10 is thus likely to be deformed into for example an elliptic shape.

In the welding structure of the present example, considering the above tendency, portions that are less likely to be thermally deformed in the circumferential direction CR of the ring gear 10 during welding are made as the flange thin-wall portions 38 having low rigidity in the twisting direction TS, and a portion that is likely to be thermally deformed is made as a part of the case-side second flange 37 formed with no thin-wall portions 38, thus forming a flange non-thin-wall portion 39 having higher rigidity in the twisting direction TS than the flange thin-wall portions 38.

Accordingly, the high rigidity portion and the low rigidity portion in the twisting direction TS are intentionally provided so that the rigidity of the ring gear 10 in the twisting direction TS is made different between the flange thin-wall portions 38 and the non-thin portions 39 in the circumferential direction CR of the ring gear 10. Even when the ring gear 10 is inevitably deformed by the heat during welding, the deformation in the radial direction RD can be more uniformized over the circumferential direction CR.

Furthermore, since the rigidity of the ring gear 10 in the twisting direction TS is different between the flange thin-wall portions 38 and the non-thin-wall portions 39 in the circumferential direction CR of the ring gear 10, the bending moment in the twisting direction TS is more uniformized in the circumferential direction CR. Thus, the ring gear 10 can be provided as a high-performance gear that is less likely to cause NV

In the welding structure of the present example, the welded portion 50 (the first and second welded portions 51 and 52) is formed circularly in the circumferential direction CR of the ring gear 10. The flange thin-wall portion 38L is provided in correspondence with the position of the lap portion 53 in which the start point and the end point of the second welded portion 52 coincide with each other. At least the lap portion 53 is formed in a position on the extended line (the arrow A-A in FIG. 1) passing in the radial direction RD of the ring gear 10. Thus, by use of the testing probe 70 brought in contact with the flange thin-wall portion 38L from the appropriate measurement position, the quality test of the lap portion 53 of the second welded portion 52 can be performed.

Specifically, the lap portion 53 of the second welded portion 52 (the welded portion 50) particularly does not have a sufficient weld depth that influences weld strength, for example, and further is apt to cause weld defects such as shrinkage, blowhole, and breakage. Thus, the quality test of the lap portion 53 is especially important.

The welding structure of the present example including the flange thin-wall portion 38L allows the above quality test of the lap portion 53 to be easily performed by a conventional measurement method using the testing probe 70 of the non-contact test device such as an ultrasonic flaw detector.

Moreover, as described above, there is no need to provide any inspection hole near the welding start-end point in the optical test method conceived by the applicants. In the welded portion 50, therefore, any fatigue breakdown resulting from such an inspection hole does not occur.

### Example 2

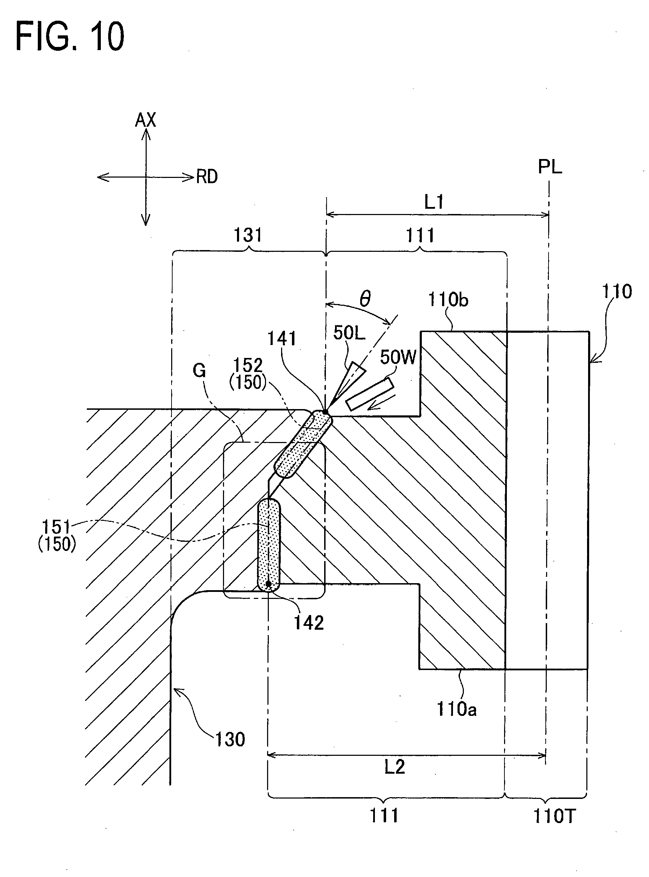

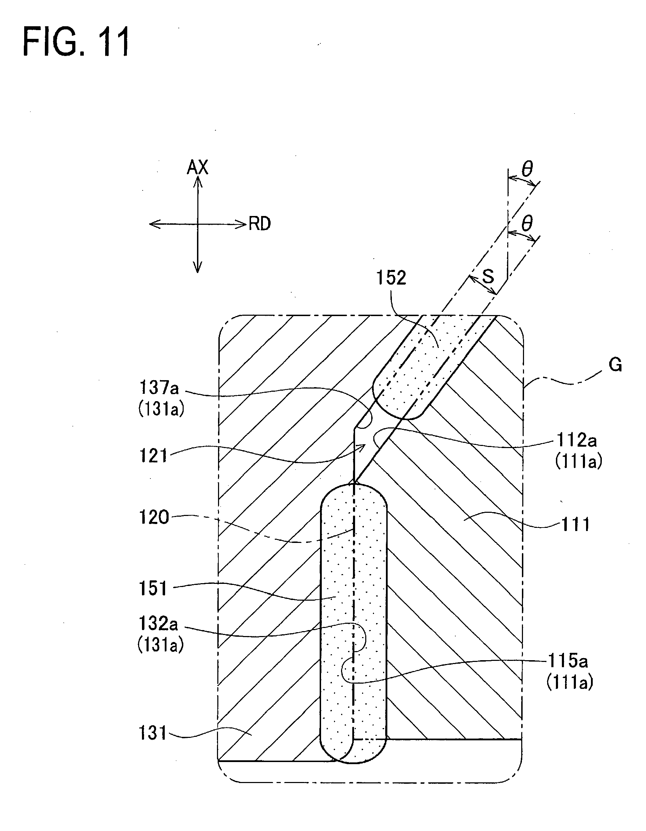

A welding structure of a second example will be described below referring to FIGs. 10 and 11.

In the welding structure of the first embodiment, the first welded portion 51 and the second welded portion 52 are placed on both sides in the axial direction AX so that the first welded portion 51 is located more outside than the gear end face 10a of the gear portion 10T in the axial direction AX.

In the welding structure of the present example, on the other hand, a first welded portion 152 on one side in the axial direction AX is formed by a gear-side weld surface and a case-side weld surface which are inclined to the axial direction AX

Accordingly, the first example and the second example are different from each other in the shapes of the gear joint and the case joint, the fixation method of the gear joint and the case joint, placement of the first welded portion and the second welded portion, and others. Other parts of the second example are identical to those of the first example.

Identical components or parts to those in the first example are assigned the same reference signs as those in the first example. The following explanation is therefore made with a focus on differences from the first example, and others are briefly explained or omitted.

FIG. 10 is an explanatory view to show the welding structure of a ring gear and a differential case in the second example of the invention, illustrating a cross sectional view taken along an arrow A-A in FIG. 1. FIG. 11 is an enlarged view of a part G in FIG. 10.

In the welding structure of the present example, a ring gear 110 and a differential case 130 are fixed by two circular welded portions 150, i.e., a first welded portion 152 on one side (an upper side in FIG. 10) and a second welded portion 151 on the other side (a lower side in FIG. 10) in the axial direction AX of the ring gear 110.

The ring gear 110 is first explained below.

The annular ring gear 110 includes a gear joint 111 (a gear joint) on a radial inside and a gear portion 110T (a gear portion) on a radial outside in the radial direction RD as shown in FIG. 10. The gear portion 110T is formed with teeth meshing with the pinion gear.

The gear joint 111 includes a gear-side weld surface 111a (a gear-side weld surface) on the radial inside in the radial direction RD as shown in FIG. 11. This gear-side weld surface 111a includes a gear-side first weld surface 112a (one gear-side weld surface) located on one side in the axial direction AX and a gear-side second weld surface 115a (other gear-side weld surface) located on the other side. The first weld surface 112a is inclined at an angle θ (θ<90°) with respect to the axial direction AX The second weld surface 115a is formed to be horizontal to the axial direction AX. The first weld surface 112a and the second weld surface 115a are continuous to each other.

In the gear joint 111, as a distance in the radial direction RD, a first distance L1 (L1>0) is set between a pitch circle action line PL acting at a meshing point on a pitch circle diameter in the axial direction AX in the gear portion 110T and a first reference end 141 located on one end in the axial direction AX. Further, a second distance L2 (L2>L1) is set between the pitch circle diameter action line PL and a second reference end 142 located on the other end in the axial direction AX

The differential case 130 is explained below.

The differential case 130 includes a case joint 131 held in contact and joined to the gear joint 111 of the ring gear 110. The case joint 131 includes a case-side weld surface 131a (a case-side weld surface) on a radial outside in the radial direction RD corresponding to the shape of the gear joint 111 as shown in FIGs. 10 and 11. This weld surface 131a further includes a case-side first weld surface 137a (one case-side weld surface) located on one side in the axial direction AX and a case-side second weld surface 132a (other case-side weld surface) located on the other side. The first weld surface 137a is inclined at an angle θ (θ<90°) with respect to the axial direction AX. The second weld surface 132a is formed to be horizontal to the axial direction AX. The first weld surface 137a and the second weld surface 132a are continuous to each other.

Before welding, when the gear joint 111 of the ring gear 110 is assembled with the case joint 131 of the differential case 130, a clearance s (s>0) is provided between the gear-side first weld surface 112a and the case-side first weld surface 137a as shown in FIG. 11.

In the welding structure of the present example, in a first welded portion 152 located on one side in the axial direction AX of a welded portion 150, the gear-side first weld surface 112a and the case-side first weld surface 137a are inclined at an angle θ (θ<90°) with respect to the axial direction AX. Specifically, the first welded portion 152 is formed such that the first weld surface 112a located on one side in the axial direction AX of the gear-side weld surface 111a and the first weld surface 137a located on one side in the axial direction AX of the case-side weld surface 131 a are spaced apart by the clearance s from each other.

The inclination angle θ of each of the gear-side first weld surface 112a and the case-side first weld surface 137a is preferably set in a range, θ = 40° to 50°, enabling stable fixation of the differential case 130 on the radial inside of the ring gear 110 in the radial direction RD while further reducing the bending moment of the ring gear 110.

In the case of θ=45°, particularly, when an external force generated by engagement between the ring gear 110 and an opposite-side gear acts in the axial direction AX of the gear portion 110T at a meshing position near the pitch circle diameter of the gear portion 110T, a component of the external force in the axial direction AX and a component of the external force on the radial inside in the radial direction RD are equal in magnitude to each other in the first welded portion 152. Therefore, the ring gear 110 is fixed in a most stable state to the differential case 130 and excessive stress is not applied to the first welded portion 152.

On the other hand, before welding, when the gear joint 111 of the ring gear 110 is assembled with the case joint 131 of the differential case 130, a gap for press-fit allowance is provided between the gear-side second weld surface 115a and the case-side second weld surface 132a.

In the welding structure of the present example, in the second welded portion 151 located on the other side in the axial direction AX, the gear-side second weld surface 115a and the case-side second weld surface 132a are formed to be horizontal to the axial direction AX Specifically, the second welded portion 151 is formed while the second weld surface 115a located on the other side in the axial direction AX of the gear-side weld surface 111a and the second weld surface 132a located on the other side in the axial direction AX of the case-side weld surface 131 a are press-fitted with each other.

Between the first welded portion 152 and the second welded portion 151, a hollow cavity portion 121 (a hollow cavity) is formed by a clearance between the gear-side weld surface 111a and the case-side weld surface 131a as shown in FIGs. 10 and 11.

Joining of the gear joint 111 of the ring gear 110 and the case joint 131 of the differential case 130 is explained below referring to FIG. 10.

The ring gear 110 is inserted on the case joint 131 of the differential case 130 from the other side to the one side (from a lower side to an upper side in FIG. 10) in the axial direction AX. The gear joint 111 of the ring gear 110 is assembled with the case joint 131 of the differential case 130.

To be concrete, until the clearance between the first weld surface 112a of the gear joint 111 and the first weld surface 137a of the case joint 131 becomes the clearance s, the second weld surface 115a of the gear joint 111 is press-fitted with the second weld surface 132a of the case joint 131. Accordingly, the ring gear 110 is positioned in place with respect to the differential case 130 by a press-fit section 120 between the gear-side second weld surface 115a and the case-side second weld surface 132a.

A method of welding the gear joint 111 of the ring gear 110 to the case joint 131 of the differential case 130 is explained below referring to FIGs. 10 and 11.

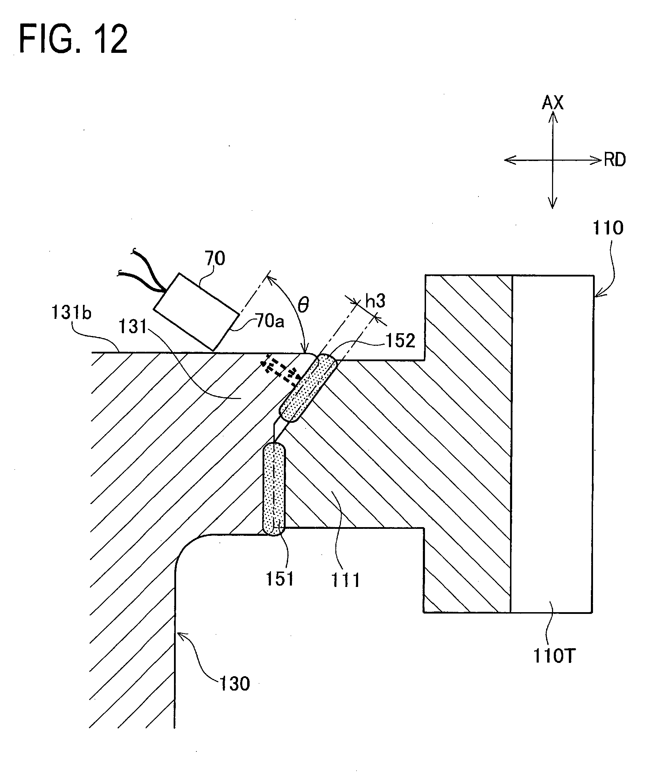

In the present example, the ring gear 110 positioned on the differential case 130 by the press-fit section 120 is fixed to the differential case 130 by two circular welded portions 150 (the first welded portion 152 and the second welded portion 151) formed by laser welding using a laser beam 50L to melt a welding wire 50W made of e.g. stainless material, a part of the gear joint 111, and a part of the case joint 131. Since the gear-side first weld surface 112a and the case-side first weld surface 137a are inclined at the inclination angle θ, the first welded portion 152 formed by welding is slanted at substantially the inclination angle θ with respect to the axial direction AX in FIG. 12.

As the order of forming the two welded portions 150, in the present example, the second welded portion 151 is first formed and then the first welded portion 152 is formed.

This is because the clearance s is provided between the gear-side first weld surface 112a and the case-side weld surface 137a which are located on the opposite side from the second welded portion 151, so that the gear joint 111 and the case joint 131 are not restrained by virtue of the clearance s during welding of the second welded portion 151. Accordingly, when the second welded portion 151 is to be formed, residual stress is less likely to occur in the second welded portion 151, thus allowing reduction in welding distortion.

The test of the welded portion 150 and the hollow cavity portion 121 is explained below referring to FIGs. 12 to 14.

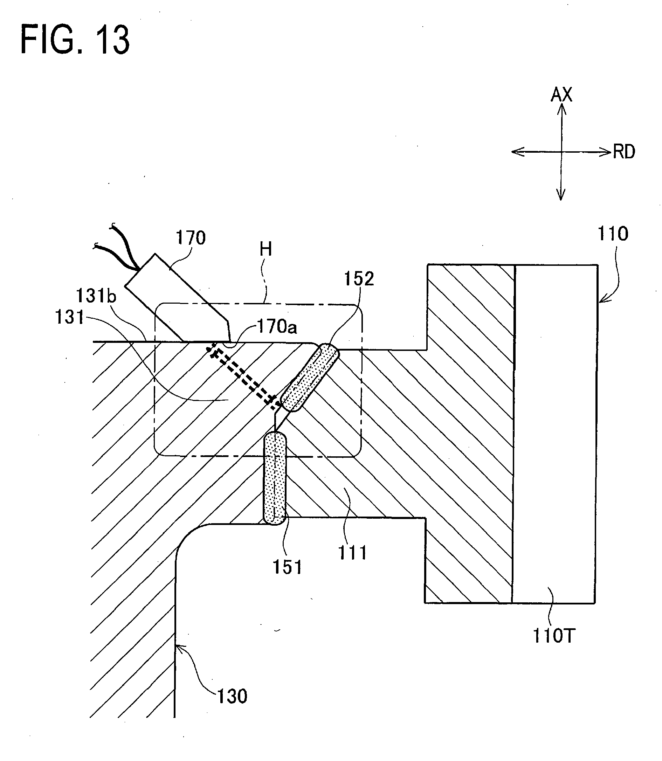

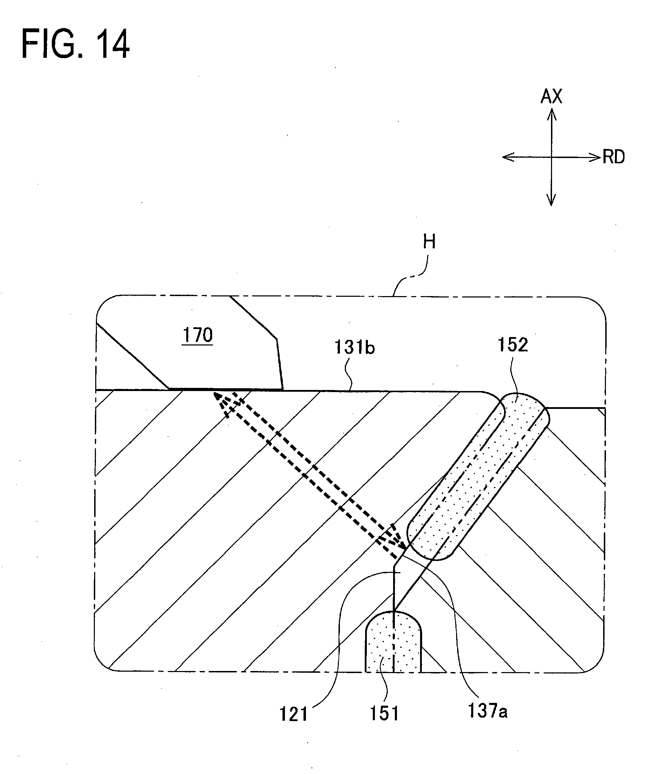

FIG. 12 is an explanatory view to show a manner of performing the quality test of the first welded portion 152. FIG. 13 is an explanatory view to show a manner of performing a confirmation test as a second test of the hollow cavity portion 121. FIG. 14 is an enlarged view of a part H in FIG. 13.

The quality test of the welded portion 150 is a nondestructive test using a test device such as an ultrasonic flaw detector in order to control weld defects such as shrinkage, blowhole, and breakage which occur in the bead of the welded portion, and the weld depth which may influence weld strength. This test is performed on all the workpieces having been subjected to welding.

In the present example, the first welded portion 152 of the welded portions 150 needs such a quality test. In addition, the confirmation test of the hollow cavity portion 121 is performed as needed. Thus, the quality test and the confirmation test are conducted using testing probes 70 and 170 such as a known ultrasonic flaw detector.

The testing probes 70 and 170 have to be placed in an orientation vertical to the first welded portion 152 and in a position at a short distance from the first welded portion 152 and the hollow cavity portion 121.

### (Quality Test of First Welded Portion)

The testing probe 70 to be used in the quality test of the first welded portion 152 is configured so that a sensor surface 70a which transmits/receives a signal to detect the condition of a welded portion is held out of contact with an object to be inspected.

In the quality test of the first welded portion 152, as shown in FIG. 12, the sensor surface 70a of the testing probe 70 is tilted at an angle θ to an end face 131b of the case joint 131 to aim at the first welded portion 152. In the quality test, a test signal such as an ultrasonic signal is transmitted from the sensor surface 70a to the first welded portion 152, the sensor surface 70a receives a reflection signal reflected from the first welded portion 152, and an operator checks whether the first welded portion 152 has a desired weld depth h3 and the presence/absence of weld defects. The quality test is performed all over the circumference of the circular first welded portion 152 as needed.

### (Confirmation Test of Hollow Cavity Portion)

The testing probe 170 to be used in the confirmation test of the hollow cavity portion 121 is configured such that a sensor surface 170a which transmits/receives a signal to detect the condition of a welded portion is held in contact with an object to be inspected. The sensor surface 170a is formed at an angle corresponding to the inclination angle θ of the gear-side first weld surface 112a and the case-side first weld surface 137a.

The confirmation test of the hollow cavity portion 121 is performed in a manner that holds the sensor surface 170a of the testing probe 170 in contact with the end face 131b of the case joint 131 to aim at the hollow cavity portion 121 as shown in FIG. 14. In the confirmation test, a test signal such as an ultrasonic signal is transmitted from the sensor surface 170a to the hollow cavity portion 121, the sensor surface 170a receives a reflection signal reflected from the case-side first weld surface 137a, and an operator checks whether the hollow cavity portion 121 is surely present. The confirmation test is performed on the entire circumference of the circular first welded portion 152 as needed.

Operations and advantages of the welding structure of the present example configured as above are explained below.

The welding structure of the present example is provided with the annular ring gear 110 including the gear portion 110T and the gear joint 111 and the differential case 130 including the case joint 131 joined to the gear joint 111. The ring gear 110 is fixed to the differential case 130 at both ends in the axial direction AX of the ring gear 110 by the welded portions 150 in which the gear-side weld surface 111a (the gear-side first weld surface 112a and the gear-side second weld surface 115a) which is a weld surface of the gear joint 111 is welded to the case-side weld surface 131a (the case-side first weld surface 137a and the case-side second weld surface 132a) which is a weld surface of the case joint 131. In the welded portion 150 (the first welded portion 152) on at least one side in the axial direction AX, the gear-side first weld surface 112a and the case-side first weld surface 137a are inclined with respect to the axial direction AX. In the quality test of the first welded portion 152 after welding, when the condition of the first welded portion 152 is to be inspected in a nondestructive manner by using the testing probe 70 of a non-contact test device such as an ultrasonic flaw detector, the testing probe 70 can be placed in an appropriate measurement position on the end face 131b of the case joint 131 so as to aim at the first welded portion 152. Thus, the quality test can be surely performed with high reliability.

Specifically, for the first welded portion 152 particularly needing to be subjected to the quality test, unless the testing probe 70 widely evenly detects from one end to the other end of the first welded portion 152 about the presence/absence of weld defects and the depth h3 of the first welded portion 152, the quality test cannot achieved with high reliability.

In the welding structure of the present example, in the first welded portion 152 as the welded portion 150 particularly needing the quality test, the gear-side first weld surface 112a and the case-side weld surface 131a are inclined at the angle θ to the axial direction AX. Thus, the first welded portion 152 formed by welding is inclined at substantially the angle θ to the axial direction AX.

Since the first welded portion 152 needing the quality test is inclined to the axial direction AX, the testing probe 70 can be held at a slant to the end face 131b of the case joint 131 according to the inclined first welded portion 152 so as to aim at the first welded portion 152 from the appropriate measurement position during the quality test. When the position of the testing probe 70 is displaced for example along the end face 131b of the case joint 131 while the probe 70 is aiming at the first welded portion 152 in the above way, the quality test can be conducted with higher accuracy through the testing probe 70 placed at close range from the first welded portion 152.

Furthermore, when the quality test is performed by holding the testing probe 70 in conformity to the inclined first welded portion 152, the testing probe 70 can widely and evenly detect the condition of the first welded portion 152 from one end on one side to the other end on the other side in the axial direction AX

Consequently, the quality test of the first welded portion 152 can be more reliably performed by placing the testing probe 70 placed in the appropriate measurement position to aim at the first welded portion 152 from the end face 131b of the case joint 131.

Accordingly, the welding structure of the present example can facilitate the placement of the testing probe 70 in the appropriate measurement position for the quality test of the first welded portion 152. It is therefore possible for the non-contact test device to transmit and receive a signal representing the condition of the first welded portion 152 between the testing probe 70 and the first welded portion 152 under more preferable conditions. This enables the test to be conducted with high reliability.

Hence, the quality test of the welded portion using the non-contact test device can be realized with good accuracy and high reliability. Therefore, The differential gear including the first welded portion 152 having been subjected to the quality test exhibits high quality.

The present example can provide superior effects of facilitating the quality test of the first welded portion 152 and also improve the quality of the differential gear including the first welded portion 152.

In the welding structure of the present example, in the first welded portion 152 of the welded portions 150, located on one side in the axial direction AX, the gear-side first weld surface 112a and the case-side first weld surface 137a are inclined at the angle θ (θ<90°) to the axial direction AX Accordingly, for example, in the case where the gear-side first weld surface 112a and the case-side first weld surface 137a are inclined at the angle θ to the radial outside of the ring gear 110, the testing probe 70 has only to be placed on the case joint 131 on a side away from the gear joint 111 and in a direction perpendicular to the angle θ. Thus, the testing probe 70 can be disposed in the appropriate measurement position without interfering with the gear portion 110T.

Consequently, as long as the testing probe 70 is aimed at the first welded portion 152 from the above position, the quality test of the first welded portion 152 can be conducted more reliably.

In the welding structure of the present example, the second welded portion 151 located on the other side in the axial direction AX, the gear-side second weld surface 115a and the case-side second weld surface 132a are formed to be horizontal to the axial direction AX When the gear portion 110T of the ring gear 110 meshes with an opposite-side gear, the first welded portion 152 can reduce a bending stress in a warping direction of the axis AX of the ring gear 110.

Specifically, when the ring gear 110 meshes with the opposite-side gear, the external force generated by meshing acts on the gear portion 110T at for example a meshing point near a pitch circle diameter in the axial direction AX of the gear portion 110T. The position of the pitch circle diameter action line PL acting in the axial direction AX at that time is defined as a reference position.

In the gear joint 111, the distance in the radial direction RD between the pitch circle diameter action line PL and the first reference end 141 located on one end in the axial direction AX is defined as the first distance L1 (L1>0). The distance between the pitch circle diameter action line PL and the second reference end 142 located on the other end in the axial direction AX is defined as the second distance L2 (L2>L1).

Since the first distance L1 and the second distance L2 are in a relation of L1<L2, the bending moment in a counterclockwise direction from the other side to one side in the axial direction AX is restrained. Thus, the bending stress to be applied on the first welded portion 152 can be reduced.

In the welding structure of the present example, the second welded portion 151 is formed in a manner that the second weld surface 115a of the gear-side weld surface 111a located on the other side in the axial direction AX and the second weld surface 132a of the case-side weld surface 131a located on the other side in the axial direction AX are press-fitted with each other. The first welded portion 152 is formed in a manner that the gear-side first weld surface 112a of the gear-side weld surface 111a located on one side in the axial direction AX and the case-side first weld surface 137a of the case-side weld surface 131a located on one side in the axial direction AX are apart from each other by the clearance s (s>0). This can reduce distortion between the ring gear 110 and the differential case 130 during welding, particularly, thermal distortion of the ring gear 110.

Specifically, the ring gear 110 and the differential case 130 are in a state where the gear-side second weld surface 115a and the case-side second weld surface 132a are press-fitted with each other on the other side in axial direction AX

On the one side in the axial direction AX, the clearance s is present between the gear-side first weld surface 112a and the case-side first weld surface 137a. Thus, even when thermal deformation occurs during welding, the gear joint 111 and the case joint 131 are not restrained by each other.

When welding of the second welded portion 151 on the other side is performed earlier than the first welded portion 152, the ring gear 110 can be placed in a state that is less likely to deform with respect to the case joint 131. Even after welding of the first welded portion 152, the thermal distortion of the ring gear 110 can be restrained.

In the welding structure of the present example, the hollow cavity portion 121 formed by a clearance between the gear-side weld surface 111a and the case-side weld surface 131 a is provided between the first welded portion 152 and the second welded portion 151. Before the beads of the first and second welded portions 152 and 151 are cool and solidified after welding, when the beads of the first welded portion 152 and the second welded portion 151 flow and are solidified with temperature changes, the hollow cavity portion 121 can absorb the flowing beads. This can prevent the occurrence of residual stress in the first welded portion 152 and the second welded portion 151.

When the first welded portion 152 and the second welded portion 151 are formed by laser welding, in particular, the beads of the first and second welded portions 152 and 151 contain gas right after welding. This gas is allowed to be released to the hollow cavity portion 121. Accordingly, it is possible to restrain weld defects such as shrinkage, blowhole, and breakage in the first welded portion 152 and the second welded portion 151.

### INDUSTRIAL APPLICABILITY

According to the present invention, as is clear from the above explanation, a welding structure capable of facilitating the quality test of a welded portion and improving the quality of a product including the above weld bead can be provided.

### REFERENCE SIGNS LIST

- 10: Ring gear
- 10T, 110T: Gear portion
- 10a, 110a: First gear end face (Gear end face)
- 11, 111: Gear joint
- 11a, 111a: Gear-side weld surface
- 15a, 112a: Gear-side first weld surface (One gear-side weld surface)
- 12a, 115a: Gear-side second weld surface (Other gear-side weld surface)
- 30, 130: Differential case (Case)
- 31, 131: Case joint
- 38, 38L: Flange thin-wall portion (Thin wall portion)
- 31a, 131a: Case-side weld surface
- 32a, 137a: Case-side first weld surface (One case-side weld surface)
- 37a, 132a: Case-side second weld surface (Other case-side weld surface)
- 50, 150: Welded portion
- 51, 152: First welded portion (First welded portion, One-side welded portion)
- 52, 151: Second welded portion
- 55: First weld separation section
- 56: Second weld separation section
- 53: Lap portion (Weld start-end point)
- 121: Hollow cavity portion (Hollow cavity)
- AX: Axial direction

## Claims

1. A welding structure comprising: an annular ring gear (10; 110) including a gear portion (10T; 110T) and a gear joint (11; 111); and a case (30; 130) including a case joint (31; 131) joined to the gear joint (11; 111), the welding structure being configured to fix the ring gear (10; 110) to the case (30; 130) by welded portions (50, 51, 52; 150, 151, 152) formed on both ends in an axial direction (AX) of the ring gear (10; 110) so that a gear-side weld surface (11a, 12a, 15a; 111a, 112a, 115a) which is a weld surface of the gear joint (11; 111) and a case-side weld surface (31a, 37a, 32a; 131a, 137a, 132a) which is a weld surface of the case joint (31; 131) are welded to each other, **characterized in that**
the welded portion (51) on at least one side in the axial direction (AX) is placed more outside than a gear end face (10a) of the gear portion (10T) in the axial direction, or
in the welded portion (152) on at least one side in the axial direction, the gear-side weld surface (112a) and the case-side weld surface (137a) are inclined with respect to the axial direction.

2. The welding structure according to claim 1, wherein a portion formed with the welded portion is one of the gear joint (11; 111) and the case joint (31; 131) that is formed to be thinner in a radial direction (RD) of the ring gear (10; 110) than other portions.

3. The welding structure according to claim 1 or 2,
wherein the welded portion (51) on at least the one side is located more outside than the gear end face (10a) in the axial direction, and
a first weld separation section (55) is provided to separate the gear end face (10a) and the welded portion (51) at a distance t1 (t1>0) in the axial direction.

4. The welding structure according to claim 1 or 2, wherein a second weld separation section (56) is provided to separate the welded portion (52) and the case joint (31) at a distance t2 (t2>0).

5. The welding structure according to any one of claims 1 to 4, wherein the case joint (31) is formed with a thin-wall portion (38) in at least one place in a circumferential direction (CR) of the ring gear (10), the thin-wall portion (38) having a reduced thickness by cutting from inside to outside in the radial direction (RD) of the ring gear.

6. The welding structure according to claim 5, wherein
the welded portion (50) is formed circularly in the circumferential direction (CR) of the ring gear (10), and
the thin-wall portion (38) is provided in correspondence with a position of a welding start-end point at which a start point and an end point of the welded portion (50) coincide, the thin-wall portion (38) being formed in a position on an extended line passing at least the welding start-end point in the radial direction (RD) of the ring gear (10).

7. The welding structure according to any one of claims 1 to 6, wherein the welded portions (150) include a first welded portion (152) located on one side in the axial direction (AX) in which the gear-side weld surface (112a) and the case-side weld surface (137a) are inclined at an angle θ (θ<90°) with respect to the axial direction (AX).

8. The welding structure according to claim 7, wherein, in the second welded portion (151) located on the other side in the axial direction, the gear-side weld surface (115a) and the case-side weld surface (132a) are formed to be horizontal to the axial direction (AX).

9. The welding structure according to claim 8,
wherein the second welded portion (151) is formed in a manner that an other gear-side weld surface (115a) located on the other side in the axial direction of the gear-side weld surface (111a) and an other case-side weld surface (132a) located on the other side in the axial direction of the case-side weld surface (131a) are press-fitted with each other, and
the first welded portion (152) is formed in a manner that one gear-side weld surface (112a) located on the one side in the axial direction of the gear-side weld surface (111a) and one case-side weld surface (137a) located on the one side in the axial direction of the case-side weld surface (131a) are separated from each other by a clearance s (s > 0).

10. The welding structure according to any one of claims 7 to 9, wherein a hollow cavity (121) is formed between the first welded portion (152) and the second welded portion (151) by a clearance between the gear-side weld surface (111a) and the case-side weld surface (131a).

## Patentansprüche

1. Schweißstruktur mit: einem Zahnkranz (10; 110) mit einem Zahnradabschnitt (10T; 110T) und einem Zahnradanschlussstück (11; 111); und einem Gehäuse (30; 130) mit einem Gehäuseanschlussstück (31; 131), das an dem Zahnradanschlussstück (11; 111) angeschlossen ist, wobei die Schweißstruktur aufgebaut ist, um den Zahnkranz (10; 110) an das Gehäuse (30; 130) mittels geschweißter Abschnitte (50, 51, 52; 150, 151, 152) zu fixieren, die an beiden Enden in einer axialen Richtung (AX) des Zahnkranzes (10; 110) ausgebildet sind, sodass eine zahnradseitige Schweißfläche (11a, 12a, 15a; 111a, 112a, 115a), welche eine Schweißfläche des Zahnradanschlussstücks (11; 111) ist, und eine gehäuseseitige Schweißfläche (31a, 37a, 32a; 131a, 137a, 132a), welche eine Schweißfläche des Gehäuseanschlussstücks (31; 131) ist, miteinander verschweißt sind, **dadurch gekennzeichnet, dass**
der geschweißte Abschnitt (51) an zumindest einer Seite in der axialen Richtung (AX) weiter außen platziert ist als eine Zahnradstirnfläche (10a) des Zahnradabschnitts (10T) in der axialen Richtung, oder
in dem geschweißten Abschnitt (152) an zumindest einer Seite in der axialen Richtung die zahnradseitige Schweißfläche (112a) und die gehäuseseitige Schweißfläche (137a) in Bezug auf die axiale Richtung geneigt sind.

2. Schweißstruktur nach Anspruch 1, wobei ein mit dem geschweißten Abschnitt ausgebildeter Abschnitt eines von dem Zahnradanschlussstück (11; 111) und dem Gehäuseanschlussstück (31; 131) ist, der ausgebildet ist, um dünner in einer radialen Richtung (RD) des Zahnkranzes (10; 110) zu sein als andere Abschnitte.

3. Schweißstruktur nach Anspruch 1 oder 2,
wobei der geschweißte Abschnitt (51) an zumindest der einen Seite weiter außen gelegen ist als die Zahnradstirnfläche (10a) in der axialen Richtung, und
ein erster Schweißtrennteilabschnitt (55) vorgesehen ist, um die Zahnradstirnfläche (10a) und den geschweißten Abschnitt (51) in einem Abstand t1 (t1>0) in der axialen Richtung zu trennen.

4. Schweißstruktur nach Anspruch 1 oder 2, wobei ein zweiter Schweißtrennteilabschnitt (56) vorgesehen ist, um den geschweißten Abschnitt (52) und das Gehäuseanschlussstück (31) in einem Abstand t2 (t2>0) zu trennen.

5. Schweißstruktur nach irgendeinem von Ansprüchen 1 bis 4, wobei das Gehäuseanschlussstück (31) mit einem dünnwandigen Abschnitt (38) in zumindest einem Ort in einer Umfangsrichtung (CR) des Zahnkranzes (10) ausgebildet ist, wobei der dünnwandige Abschnitt (38) eine verringerte Dicke durch Spanen von innen nach außen in der radialen Richtung (RD) des Zahnkranzes hat.

6. Schweißstruktur nach Anspruch 5, wobei
der geschweißte Abschnitt (50) ringförmig in der Umfangsrichtung (CR) des Zahnkranzes (10) ausgebildet ist, und
der dünnwandige Abschnitt (38) in Übereinstimmung mit einer Position eines Schweißstartendpunkts vorgesehen ist, an welchem ein Startpunkt und ein Endpunkt des geschweißten Abschnitts (50) übereinstimmen, wobei der dünnwandige Abschnitt (38) in einer Position an einer verlängerten Linie ausgebildet ist, die zumindest den Schweißstartendpunkt in der radialen Richtung (RD) des Zahnkranzes (10) passiert.

7. Schweißstruktur nach irgendeinem von Ansprüchen 1 bis 6, wobei die geschweißten Abschnitte (150) einen ersten geschweißten Abschnitt (152) umfassen, der an einer Seite in der axialen Richtung (AX) liegt, in welcher die zahnradseitige Schweißfläche (112a) und die gehäuseseitige Schweißfläche (137a) in einem Winkel θ (θ < 90°) in Bezug auf die axiale Richtung (AX) geneigt sind.

8. Schweißstruktur nach Anspruch 7, wobei in dem zweiten geschweißten Abschnitt (151), der an der anderen Seite in der axialen Richtung liegt, die zahnradseitige Schweißfläche (115a) und die gehäuseseitige Schweißfläche (132a) ausgebildet sind, um horizontal zu der axialen Richtung (AX) zu sein.

9. Schweißstruktur nach Anspruch 8,
wobei der zweite geschweißte Abschnitt (151) auf eine Weise ausgebildet ist, dass eine andere zahnradseitige Schweißfläche (115a), die an der anderen Seite in der axialen Richtung der zahnradseitigen Schweißfläche (111a) liegt, und eine andere gehäuseseitige Schweißfläche (132a), die an der anderen Seite in der axialen Richtung der gehäuseseitigen Schweißfläche (131a) liegt, miteinander eingepresst sind, und
der erste geschweißte Abschnitt (152) auf eine Weise ausgebildet ist, dass eine zahnradseitige Schweißfläche (112a), die an der einen Seite in der axialen Richtung der zahnradseitigen Schweißfläche (111a) liegt, und eine gehäuseseitige Schweißfläche (137a), die an der einen Seite in der axialen Richtung der gehäuseseitigen Schweißfläche (131a) liegt, voneinander durch einen Abstand s (s > 0) getrennt sind.

10. Schweißstruktur nach irgendeinem von Ansprüchen 7 bis 9, wobei ein Hohlraum (121) zwischen dem ersten geschweißten Abschnitt (152) und dem zweiten geschweißten Abschnitt (151) durch einen Abstand zwischen der zahnradseitigen Schweißfläche (111a) und der gehäuseseitigen Schweißfläche (131a) ausgebildet ist.

## Revendications

1. Structure de soudage comprenant : une couronne dentée annulaire (10 ; 110) comprenant une partie d'engrenage (10T ; 110T) et un joint d'engrenage (11 ; 111) ; et un boîtier (30 ; 130) comprenant un joint de boîtier (31 ; 131) assemblé au joint d'engrenage (11 ; 111), la structure de soudage étant configurée pour fixer la couronne dentée (10 ; 110) au boîtier (30 ; 130) par des parties soudées (50, 51, 52 ; 150, 151, 152) formées sur deux extrémités dans une direction axiale (AX) de la couronne dentée (10 ; 110) de sorte qu'une surface de soudure du côté de l'engrenage (11a, 12a, 15a ; 111a, 112a, 115a) qui est une surface de soudure du joint d'engrenage (11; 111) et une surface de soudure du côté du boîtier (31a, 37a, 32a ; 131a, 137a, 132a) qui est une surface de soudure du joint de boîtier (31 ; 131) sont soudées entre elles, **caractérisée en ce que** :
la partie soudée (51) sur au moins un côté dans la direction axiale (AX) est placée plus à l'extérieur qu'une face d'extrémité d'engrenage (10a) de la partie d'engrenage (10T) dans la direction axiale, ou bien
dans la partie soudée (152) sur au moins un côté dans la direction axiale, la surface de soudure du côté de l'engrenage (112a) et la surface de soudure du côté du boîtier (137a) sont inclinées par rapport à la direction axiale.

2. Structure de soudage selon la revendication 1, dans laquelle une partie formée avec la partie soudée est l'une parmi le joint d'engrenage (11 ; 111) et le joint de boîtier (31 ; 131), qui est formée pour être plus fine dans une direction radiale (RD) de la couronne dentée (10 ; 110) que les autres parties.

3. Structure de soudage selon la revendication 1 ou 2,
dans laquelle la partie soudée (51) sur au moins le premier côté, est positionnée plus à l'extérieur que la face d'extrémité d'engrenage (10a) dans la direction axiale, et
une première section de séparation de soudure (55) est prévue pour séparer la face d'extrémité d'engrenage (10a) et la partie soudée (51) à une distance t1 (t1 > 0) dans la direction axiale.

4. Structure de soudage selon la revendication 1 ou 2, dans laquelle une seconde section de séparation de soudure (56) est prévue pour séparer la partie soudée (52) et le joint de boîtier (31) à une distance t2 (t2 > 0).

5. Structure de soudage selon l'une quelconque des revendications 1 à 4, dans laquelle le joint de boîtier (31) est formé avec une partie de paroi fine (38) à au moins un emplacement dans une direction circonférentielle (CR) de la roue dentée (10), la partie de paroi fine (38) ayant une épaisseur réduite en coupant de l'intérieur vers l'extérieur dans la direction radiale (RD) de la couronne dentée.

6. Structure de soudage selon la revendication 5, dans laquelle :
la partie soudée (50) est formée de manière circulaire dans la direction circonférentielle (CR) de la couronne dentée (10), et
la partie de paroi fine (38) est prévue en correspondance avec une position d'un point de début - fin de soudage au niveau de laquelle un point de début et un point de fin de la partie soudée (50) coïncident, la partie de paroi fine (38) étant formée dans une position sur une ligne étendue passant au moins par le point de début - fin de soudage dans la direction radiale (RD) de la couronne dentée (10).

7. Structure de soudage selon l'une quelconque des revendications 1 à 6, dans laquelle les parties soudées (150) comprennent une première partie soudée (152) positionnée sur un côté dans la direction axiale (AX) dans laquelle la surface de soudure du côté de l'engrenage (112a) et la surface de soudure du côté du boîtier (137a) sont inclinées à un angle θ (θ < 90°) par rapport à la direction axiale (AX).

8. Structure de soudage selon la revendication 7, dans laquelle, dans la seconde partie soudée (151) positionnée sur l'autre côté dans la direction axiale, la surface de soudure du côté de l'engrenage (115a) et la surface de soudure du côté du boîtier (132a) sont formées pour être horizontales par rapport à la direction axiale (AX).

9. Structure de soudage selon la revendication 8,
dans laquelle la seconde partie soudée (151) est formée d'une manière selon laquelle une autre surface de soudure du côté de l'engrenage (115a) positionnée sur l'autre côté dans la direction axiale de la surface de soudure du côté de l'engrenage (111a) et une autre surface de soudure du côté du boîtier (132a) positionnée sur l'autre côté dans la direction axiale de la surface de soudure du côté du boîtier (131a), sont montées par pression l'une par rapport à l'autre, et
la première partie soudée (152) est formée d'une manière selon laquelle une surface de soudure du côté de l'engrenage (112a) positionnée sur le premier côté dans la direction axiale de la surface de soudure du côté de l'engrenage (111a) et une surface de soudure du côté du boîtier (137a) positionnée sur le premier côté dans la direction axiale de la surface de soudure du côté du boîtier (131a) sont séparées l'une de l'autre par un jeu s (s > 0).

10. Structure de soudage selon l'une quelconque des revendications 7 à 9, dans laquelle une cavité creuse (121) est formée entre la première partie soudée (152) et la seconde partie soudée (151) par un jeu entre la surface de soudure du côté de l'engrenage (111a) et la surface de soudure du côté du boîtier (131a).
